# EUROPEAN PATENT APPLICATION

(11) **EP 4 783 518 A1**
(43) Date of publication of application: **29.07.2026**
(21) Application number: 25153928.4
(22) Date of filing: 24.01.2025
(51) Int. Cl.: H04L 9/40, H04W 12/033

(54) **METHOD APPARATUS FOR SELECTIVELY APPLYING CRYPTOGRAPHIC PROCESSING TO USER PLANE TRAFFIC IN A TELECOMMUNICATION NETWORK**

(71) Applicant: Deutsche Telekom AG, 53113 Bonn (DE)
(72) Inventor: COLOM IKUNO, Josep, 2100 Korneuburg (AT); BERGER, Karl, 1210 Wien (AT)
(74) Representative: 2SPL Patentanwälte PartG mbB

(57) **Abstract**

Provided is a concept for selectively applying cryptographic processing to user plane (UP) traffic in a telecommunication network. It includes receiving cryptographic policy information indicative of cryptographic policies for at least one portion of UP traffic. It includes determining, based on the cryptographic policy information, whether to apply cryptographic processing to the at least one portion of the UP traffic. The cryptographic processing comprises at least one of encryption or integrity protection. Further, the proposed concept includes selectively applying the cryptographic processing to the portion of the UP traffic at a granularity of at least one of an interface, a tunnel, a protocol data unit (PDU) session, or a quality-of-service (QoS) flow

## Description

### Field

The present disclosure generally relates to the field of telecommunication network security, focusing on enhancing encryption methods for user-plane data in 5G and beyond.

### Background

In modern mobile communication networks, infrastructure is divided into Access Network (AN) and Core Network (CN), with a User Equipment (UE) connected to a Data Network (DN) through these layers. The user-plane data is transmitted over interfaces like N3, employing protocols such as GTP-U (GPRS Tunneling Protocol User Plane) for tunneling.

The current state of the art employs Internet Protocol Security (IPSec) tunnels for securing user-plane (UP) data, which may ensure confidentiality and integrity during transmission. IPSec is a suite of protocols developed by the Internet Engineering Task Force (IETF) to secure Internet communications by authenticating and encrypting each IP packet in a data stream. IPsec operates at the network layer, providing end-to-end security for data transmitted over IP networks. However, these tunnels a parallel network topology built on top of the network and thus add complexity to network management and reduce the flexibility of traffic routing within the operator's transport network. Furthermore, increasing data rates in 5G and future networks amplify the computational burden of encryption, leading to inefficiencies when applying uniform encryption across all traffic types.

One significant drawback of the existing approach is the inability to selectively encrypt user-plane traffic based on available system information. This limitation results in higher resource consumption, both in terms of computational overhead and energy usage. Additionally, IPSec's point-to-point architecture limits the operator's ability to implement efficient, and especially automated, traffic steering, routing and/or failover mechanisms across the network.

Thus, there is a demand for dynamic, efficient, and flexible encryption mechanisms for user-plane data, allowing selective application based on traffic type or quality-of-service requirements. This may reduce resource consumption while maintaining robust security for sensitive data flows.

### Summary

This demand is addressed by methods and apparatuses in accordance with the independent claims. Possibly advantageous embodiments are addressed by the dependent claims.

According to a first aspect of the present disclosure, it is proposed an apparatus for selectively applying cryptographic processing to user plane (UP) traffic in a telecommunication network. The apparatus comprises processing circuitry configured to receive cryptographic policy information indicative of cryptographic policies for at least one portion of UP traffic. The processing circuitry is further configured to determine, based on the cryptographic policy information, whether to apply cryptographic processing to the at least one portion of the UP traffic. The cryptographic processing comprises at least one of encryption or integrity protection. Additionally, the processing circuitry is configured to selectively apply the cryptographic processing to the portion of the UP traffic at a granularity of at least one of an interface, a tunnel, a protocol data unit (PDU) session, or a quality-of-service (QoS) flow.

The present disclosure thus proposes an apparatus designed to apply encryption or data integrity protection selectively to specific user data being transmitted in a telecom network. The apparatus can receive information about security policies, which define how and where encryption or integrity checks should be applied. Using this policy information, the apparatus may decide whether encryption and/or integrity protection is necessary for particular portions of the transmitted data. It can then apply these security measures to targeted areas, such as specific network connections, communication tunnels, data sessions, or even particular types of traffic with defined quality requirements. This approach may ensure security is applied only where needed, optimizing network performance while maintaining robust protection. This may enable dynamic and granular control over cryptographic measures, enhancing both security and network efficiency by tailoring protection mechanisms to the specific characteristics of the UP traffic.

According to some embodiments, the apparatus is configured to receive the cryptographic policy information from and/or via at least one network function, management system, or subscription database. The network function may include entities selected from a group comprising a Session Management Function (SMF) or a Policy Control Function (PCF), for example, while the subscription database may include entities such as a Unified Data Management (UDM) entity or a User Data Repository (UDR). The apparatus can thus receive the policies from various sources within the network, such as management systems or databases that store user and session information. These sources may include key network components responsible for managing data sessions and policies, like the SMF or PCF. Additionally, it can access subscription-related information from databases like the UDM entity or UDR. This may ensure that the security policies are accurate, up-to-date, and aligned with the specific needs of users and network operations.

According to some embodiments, the apparatus is configured to selectively apply the cryptographic processing on one or more of specific network interfaces. These include an N3 interface between a gNodeB (gNB) and a User Plane Function (UPF), an N9 interface between UPFs, an F1-U interface within disaggregated Radio Access Network (RAN) components, or an Xn-U interface between gNBs. Thus, the apparatus can apply encryption or data protection selectively at specific points within the network. These points include the interfaces where data is transmitted between different network components, such as between a base station and the core network, between core network nodes, or within the components of the radio access network. By targeting these specific interfaces, the apparatus may ensure that security is applied only where it is most needed. This approach may reduce unnecessary processing and resource use while still protecting sensitive information effectively.

According to some embodiments, the apparatus is configured to obtain subscription data from a UDM entity or a UDR. The subscription data includes cryptographic policies or encryption requirements associated with a UE. Once the apparatus obtains subscription data, it can use this data to enforce security, session, and network policies tailored to the subscriber. Specifically, the apparatus can determine cryptographic processing requirements for user-plane traffic, such as whether encryption, integrity protection, or both are necessary. The subscription data may include details like Quality of Service (QoS) parameters, network slice identifiers (S-NSSAI), PDU session types, and specific cryptographic policies that define encryption algorithms and key lengths. Using this information, the apparatus can dynamically configure and apply security measures to traffic associated with the subscriber. For example, it can selectively apply encryption to certain PDU sessions or QoS flows, ensuring compliance with operator-defined policies or regulatory requirements. The apparatus may also manage cryptographic keys and parameters based on the subscription data, ensuring secure communication and proper allocation of resources. Additionally, the apparatus can use the subscription data to enable or adjust network functionality, such as selecting the appropriate network slice or applying differentiated services based on the subscriber's service profile (e.g. different treatment of enterprise versus consumer customers and/or traffic). This may ensure that the apparatus not only secures the traffic but also optimizes network performance while adhering to the specific needs of the subscriber.

According to some embodiments, the cryptographic policy information specifies parameters associated with cryptographic processing, network elements, session characteristics, or traffic management. This means that the cryptographic policies used by the apparatus can define various details related to how encryption or data integrity protection should be applied. These policies can include parameters that specify the type and method of cryptographic processing to be used. They may also define details about the network components involved, such as endpoint information or identifiers. Additionally, the policies can include information about the characteristics of data sessions, such as the type of session or specific attributes associated with it. Further, the policies may cover traffic management aspects, such as how data flows should be prioritized or filtered. This may allow for precise and efficient application of security measures across different parts of the network.

According to some embodiments, the parameters associated with cryptographic processing include at least one of the types of processing (e.g., encryption or integrity protection), cryptographic algorithms, or settings (e.g., IPsec, (m)TLS, or DTLS). This may ensure that the apparatus can adapt to specific security requirements while maintaining compatibility with industry-standard protocols and configurations.

According to some embodiments, parameters associated with network elements include at least one of endpoint-related information such as user identifiers, such as a Subscriber Permanent Identity, SUPI or International mobile subscriber identity, IMSI; identifiers derived and/or associated to a user, such as a Globally Unique Temporary Identifier, GUTI, Temporary Mobile Subscriber Identity, TMSI, IP or MAC addresses, or identifiers for network components like gNB or UPF IP addresses. This may allow the apparatus to identify and secure data flows effectively by leveraging specific network-level attributes.

According to some embodiments, parameters associated with session characteristics include at least one of PDU session identifiers, session types, application identifiers, or data network names (DNN). This may ensure that cryptographic processing can be applied flexibly based on session-specific requirements, enhancing security while preserving efficient network operations.

According to some embodiments, parameters associated with traffic management include aspects such as slice identifiers, QoS-related information, traffic classification markers, or filtering parameters. By integrating traffic management details, the apparatus enables precise application of cryptographic measures, optimizing both security and performance.

Thus, apparatus can use detailed security policies to determine how to apply encryption or data integrity protection to network traffic. The cryptographic policy information can specify various factors, such as the type of security processing required (e.g., encryption or integrity protection) and the specific algorithms or parameters to be used (e.g., IPsec, (m)TLS, or DTLS). Additionally, the policies can include information about the endpoints involved in the communication, such as unique user identifiers like a Subscription Permanent Identifier (SUPI), session identifiers (PDU session ID), IP addresses, or MAC addresses. The policies may also reference other network-related attributes, such as the name of the data network (DNN), parameters for network slicing (S-NSSAI), and traffic classification markers like IP filters, Differentiated Services Code Point (DSCP) values, or Type of Service (ToS) values. Furthermore, the policies can provide information specific to quality-of-service (QoS) flows, including identifiers for different traffic flows. This may ensure that cryptographic processing can be tailored to the specific security needs of different types of data, network slices, and traffic flows, optimizing both performance and security.

According to some embodiments, the apparatus is configured to apply encryption to specific QoS flows within a PDU session in response to cryptographic policy information. This means that the apparatus may be designed to apply encryption to particular streams of data, known as QoS flows, within a single communication session, referred to as a PDU session. The decision to encrypt specific QoS flows is based on cryptographic policies that define which data streams require protection. This may ensure that sensitive or high-priority data within a session is encrypted as needed, while other data can remain unencrypted, optimizing both security and network performance.

Similarly, it is possible to apply to other different, specific QoS flows integrity protection, such that such QoS flows can efficiently protected against manipulation without requiring the full computational processing of encryption.

According to some embodiments, the apparatus is configured to manage multiple encryption modes for user plane traffic concurrently. These modes may include IPsec tunnel mode, unencrypted mode, partially encrypted mode, and fully encrypted mode. This means that the apparatus may be capable of handling different types of encryptions simultaneously for the data being transmitted over the user plane. It can operate in various modes, such as encrypting all the data using a secure tunnel, leaving some data unencrypted, encrypting only certain parts of the data, or fully encrypting everything. By managing these modes at the same time, the apparatus may ensure flexibility to meet different security requirements for various types of data or network conditions.

According to some embodiments, the apparatus is configured to selectively encrypt specific PDU sessions identified by session type or application identifier. For example, PDU sessions carrying IP Multimedia Subsystem (IMS) signaling or those mandated by operator policy may be encrypted, while sessions relying on application-level security protocols remain unencrypted, such as PDU sessions for Internet-bound traffic, especially for consumer-type clients or of specific applications. This means that the apparatus can choose to encrypt certain communication sessions, known as PDU sessions, based on their type or the application they support. For example, it can encrypt sessions that carry IMS signaling or sessions required to be encrypted by operator policies. At the same time, it allows other sessions to remain unencrypted if they already use application-level security protocols, such as end-to-end encryption provided by the application itself. This may ensure that encryption is applied where necessary while avoiding redundant processing for data that is already secured.

According to some embodiments, the apparatus is configured to apply an additional cryptographic layer to a PDU session or QoS flow that already has application-layer encryption. This means that the apparatus can add an extra layer of encryption to data within a PDU session or a specific QoS flow, even if the data is already encrypted by the application handling it. This additional layer may enhance security by providing further protection against potential vulnerabilities in the application-layer encryption. It may ensure that the data remains secure even if one encryption layer is compromised, offering a more robust and comprehensive approach to safeguarding sensitive information.

According to some embodiments, the apparatus is configured to associate encryption levels or requirements with individual QoS flows within a PDU session. This means that the apparatus can assign specific encryption requirements or levels of encryption to different data streams, known as QoS flows, within a single PDU session. Each QoS flow can have its own unique cryptographic settings or protocols based on its characteristics or security needs. This may allow for tailored security measures, ensuring that sensitive or high-priority data receives stronger protection, while less critical data can use lighter or different encryption methods, optimizing both security and performance.

According to some embodiments, the cryptographic processing is performed using a protocol selected from a group comprising IPsec, (m)TLS, and DTLS. This means that the apparatus may be designed to handle encryption and data protection using one of several established security protocols. These protocols include IPsec, which secures data at the network layer; (m)TLS, which provides encryption and authentication for secure communication; and DTLS, which is specifically used for securing datagram-based communications. By supporting these protocols, the apparatus may ensure compatibility with widely used security standards and offers flexibility to meet different security requirements in the network.

According to some embodiments, the cryptographic processing includes integrating an IPsec layer into a UPF and a RAN node, establishing the IPsec tunnel over or beneath an N3 interface. This means that the apparatus may be capable of incorporating an IPsec security layer into two network components: the UPF and a RAN node. It may establish a secure IPsec tunnel for encrypting and protecting data transmitted across the N3 interface, which connects the RAN and UPF. The IPsec tunnel can be set up either below or above the N3 interface within the network architecture, providing flexibility in how encryption is implemented to enhance data security while maintaining compatibility with the network's structure.

According to some embodiments, the cryptographic processing includes integrating an IPsec layer into a UPF and a RAN node, establishing the IPsec tunnel over or beneath an N9, F1-U and/or Xn-U interface.

According to some embodiments, the cryptographic processing is implemented by encrypting user-plane data within the N3, N9, F1-U and/or Xn-U interface using DTLS or (m)TLS, without encapsulating the packets in an IPsec tunnel. This means that the apparatus may be configured to encrypt user-plane data being transmitted over the interface, focusing specifically on protecting GTP-U (GPRS Tunneling Protocol-User plane) payloads. Instead of using an IPsec tunnel, the encryption may be performed using protocols such as DTLS or (m)TLS. This may provide strong encryption for the data while avoiding the additional overhead associated with encapsulating the packets in an IPsec tunnel, resulting in more efficient data transmission while maintaining security.

According to some embodiments, a GTP-U extension header may carry metadata related to the applied cryptographic processing. This metadata may comprise at least one of an encryption algorithm identifier, an integrity protection indicator, or cryptographic key information, thereby enabling network components to interpret and process the encrypted GTP-U payload accordingly.

According to some embodiments, the cryptographic processing further includes repeated or nested multiple layers of encryption that can be dynamically applied. The processing circuitry is configured to detect when multiple security layers exist within a user-plane protocol stack, enabling adaptive management of encryption layers for enhanced security. This means that the apparatus may apply multiple layers of encryption or other security measures to user-plane data, either repeatedly or in a nested manner. These layers can be dynamically added or adjusted as needed. The apparatus may also be capable of detecting when the user-plane protocol stack already contains multiple security layers. This may ensure that the system can manage and optimize the security configuration effectively, enhancing data protection while avoiding unnecessary redundancy in encryption.

According to some embodiments, the apparatus is configured to apply end-to-end encryption between the user equipment (UE) and the core network (CN), bypassing encryption at the gNB. This means that the apparatus may be designed to establish encryption that protects data all the way from the UE to the CN. This end-to-end encryption may ensure that the data remains secure throughout its journey without being decrypted or re-encrypted at the base station, known as the gNodeB (gNB). By bypassing encryption at the gNB, the apparatus may reduce potential vulnerabilities and ensure a continuous, end-to-end, secure path for the data.

According to some embodiments, the apparatus is configured to provide cryptographic policy updates via NAS signaling, such as UE Configuration Update (UCU) or UE Parameter Update (UPU) procedures. This means that the apparatus may update cryptographic policies for a user device by using signaling through the non-access stratum (NAS), which is the communication layer between the UE and the CN. These updates may be delivered using specific NAS procedures, such as the UCU or UPU. This capability may ensure that the user device always follows the latest security policies, adapting to changes in network requirements or user-specific configurations.

According to some embodiments, the cryptographic policy information includes network slice parameters, and the processing circuitry is configured to apply cryptographic processing selectively to user-plane traffic associated with specific slice identifiers (S-NSSAI). This means that the apparatus may include network slicing information as part of its cryptographic policies. Network slicing allows the network to be divided into virtual segments, each serving specific purposes or users. The apparatus may use the slice identifier, known as S-NSSAI (Single Network Slice Selection Assistance Information), to identify a specific slice. Based on this identifier, the apparatus may selectively apply encryption or other cryptographic measures to user-plane (UP) traffic associated with that particular slice. This may ensure that security measures are tailored to the specific needs and characteristics of each network slice.

According to some embodiments, the user-plane cryptographic processing information is provided based on a policy-based decision triggered by a request from a UE, gNB, SMF, or PCF. The apparatus is configured to apply cryptographic processing in response to the trigger source. This means that the apparatus may apply cryptographic processing to UP data based on specific triggers defined by policies. These triggers can come from various sources, such as a request from the UE, a request from the base station (gNodeB or gNB), or instructions from network management entities like the SMF or the PCF. The apparatus may use these triggers to determine when and how to apply encryption or other security measures, ensuring that cryptographic processing is dynamically and appropriately applied based on the needs of the network or user.

According to some embodiments, the apparatus is configured to receive cryptographic configuration instructions from a core network node. These instructions may be delivered via procedures such as DOWNLINK RAN CONFIGURATION TRANSFER or AMF CONFIGURATION UPDATE. The processing circuitry applies the instructions to the apparatus or relevant RAN nodes. This means that the apparatus may be designed to receive instructions from a CN node regarding how cryptographic processing should be configured. These instructions can be sent using specific network procedures, such as the DOWNLINK RAN CONFIGURATION TRANSFER procedure or the AMF CONFIGURATION UPDATE procedure. Once the apparatus receives these instructions, it can apply them to itself or forward them to a RAN node. This may allow the apparatus to selectively enable or disable cryptographic processing on specific UP interfaces, ensuring that security measures align with the network's current policies and requirements.

According to some embodiments, the apparatus is configured to generate cryptographic configuration instructions at an access network component, such as a centralized unit (CU), CU-control plane (CU-CP), CU-user plane (CU-UP), distributed unit (DU), or radio unit (RU). The instructions may be transmitted to another access network component to enable or disable selective cryptographic processing for specific user-plane traffic portions. This means that the apparatus may be create cryptographic configuration instructions at one part of the access network, such as a CU, its control plane (CU-CP), its user plane (CU-UP), a DU, or a RU. These instructions specify how encryption or other cryptographic processing should be applied. The apparatus can then send these instructions to another component within the access network. This allows the second component to enable or disable cryptographic processing for specific portions of user-plane traffic, ensuring that security measures are applied dynamically and as needed across the network.

According to some embodiments, the apparatus is configured to receive encryption policy information that is independent of session management (SM) procedures during registration or re-registration procedures. This information defines cryptographic rules applied to user-plane traffic independently of PDU session management procedures. The apparatus may apply encryption based on criteria such as DNN-based filtering, IP filtering, or slice-related parameters, ensuring robust and flexible data protection. This means that the apparatus may receive encryption policies during a registration or re-registration process, even if these policies are not tied to the establishment of a specific PDU session. It can store or update cryptographic rules based on these independent policies and apply them to user-plane traffic regardless of the usual session management processes. The apparatus can then use criteria such as data network names (DNN), IP-based filtering, or network slice parameters (e.g., S-NSSAI) to determine how and where to apply encryption. This may allow encryption to be configured and managed independently of session management signaling from the SMF, enabling more flexible and proactive security measures.

According to some embodiments, the processing circuitry is configured to apply encryption and integrity protection to at least one PDU session or QoS flow and to apply integrity protection without encryption to another. The cryptographic mode for each session or flow is selected based on a trust level or cryptographic policy associated with network elements or subscribers. This means that the apparatus may apply different levels of security to different data sessions or data flows within a session. For some sessions or flows, it can apply both encryption and integrity protection to secure the data fully. For others, it may apply only integrity protection without encryption, ensuring data has not been tampered with but leaving it unencrypted. The decision about which security mode to use for each session or flow may be based on factors like the level of trust in the network elements involved or specific cryptographic policies associated with the subscriber. This may allow the apparatus to balance security needs with performance requirements effectively.

According to some embodiments, the apparatus is configured to provide and/or receive capability indication information to/from other network elements. This may be an independent aspect of the present disclosure. Thus, according to a further aspect of the present disclosure, it is provided an apparatus for cryptographic processing in a telecommunications network. The apparatus is configured to provide and/or receive capability indication information to and/or from other network elements, wherein the capability indication information specifies supported cryptographic processing capabilities (for UP traffic) of the apparatus or the other network elements.

This information may specify supported cryptographic processing capabilities and can be transmitted directly or indirectly via a Network Repository Function (NRF) or network function profile. This means that the apparatus may be designed to share information about its cryptographic processing capabilities with other parts of the network. It can specify what types of encryption or security features it supports. This information can be transmitted or stored in a Network Repository Function (NRF), which is a central component that helps manage and discover network functions, or in a network function profile that describes the capabilities of specific network elements. By providing this capability indication, the apparatus may ensure that other network components can coordinate effectively and make informed decisions about using its cryptographic features.

According to some embodiments, the capability indication information may be provided through various procedures, such as Radio Resource Control (RRC) procedures, non-access stratum (NAS) procedures, F1-C, Xn-C or N2 procedures. This means that the apparatus may share its cryptographic capabilities with other network components using various communication methods. These methods include procedures between user devices and the access network, especially a radio access network; between user devices and the core network; between the access network, especially a radio access network, and the core network; or between components of the access network; or between components in the core network. Additionally, the apparatus can provide this information through the Network Repository Function (NRF), which may help network functions discover and select other functions based on their capabilities. By using these mechanisms, the apparatus may ensure that all relevant network elements are informed about the encryption methods and parameters it supports, enabling better coordination and secure operation throughout the network.

According to a further aspect of the present disclosure, it is proposed a method of selectively applying cryptographic processing to UP traffic in a telecommunication network. The method comprises receiving, at a network node, cryptographic policy information indicative of cryptographic policies for at least one portion of UP traffic. The method further includes determining, based on the cryptographic policy information, whether to apply cryptographic processing to the at least one portion of the UP traffic, wherein the cryptographic processing comprises at least one of encryption or integrity protection. Additionally, the method involves selectively applying the cryptographic processing at a granularity of at least one of an interface, a tunnel, a PDU session, or a QoS flow. This may enable dynamic and precise application of security measures, optimizing data protection and performance.

According to some embodiments, the method further comprises transmitting or forwarding the UP traffic in accordance with the selectively applied cryptographic processing. This may ensure that the traffic flows through the network while maintaining the designated level of encryption or integrity protection, preserving the intended security.

According to some embodiments, the cryptographic policies are retrieved at the CN, including entities such as a SMF or a PCF, from subscription data stored in at least one of a UDM entity or a UDR. The subscription data indicates cryptographic requirements for a particular subscriber or UE. This may ensure that cryptographic policies align with user-specific needs and network configurations.

According to some embodiments, a non-transitory computer-readable medium is provided, storing program instructions that, when executed by one or more processors of a network entity, cause the network entity to perform operations according to the described method. This may enable the implementation of the cryptographic processing functionality in various network nodes, facilitating deployment and scalability.

According to a further aspect of the present disclosure, it is proposed a method of steering selective cryptographic processing policies in a telecommunication network. The method comprises generating, at a PCF or a SMF, cryptographic processing rules that specify how UP traffic is to be selectively encrypted or integrity-protected. The method further includes providing, by the PCF or SMF, the cryptographic processing rules to at least one network entity that handles UP traffic. These rules specify a cryptographic processing parameter, for example, selected from a group of an encryption protocol identifier, a QoS flow identifier, a slice identifier, a DNN/APN-based filter, and a DSCP or ToS parameter. Additionally, the method involves triggering, based on the cryptographic processing rules, selective cryptographic processing of the UP traffic at the network entity, performed at a granularity of at least one of an interface, a tunnel, a PDU session, or a QoS flow. This may enable efficient and context-aware application of security measures across the network.

According to some embodiments, the cryptographic processing rules are dynamically updated during the lifetime of the PDU session or QoS flow. These updates may be delivered via non-access stratum (NAS) signaling to a UE or via network signaling to a RAN node. This dynamic update capability may ensure that the cryptographic processing remains aligned with evolving requirements and network conditions, maintaining robust and adaptive security measures.

Embodiments of the present disclosure may provide several advantages, including enhanced security through dynamic and selective cryptographic processing of UP traffic. By tailoring encryption and integrity protection to specific portions of traffic, such as PDU sessions, QoS flows, or network interfaces, embodiments may optimize resource utilization while maintaining robust data protection. The ability to retrieve cryptographic policies from various sources, such as the UDM, UDR, SMF, or PCF, may ensures that the security measures are aligned with subscriber-specific requirements and network configurations. Furthermore, the apparatus may support dynamic updates to cryptographic rules and the use of standard protocols such as IPsec, (m)TLS, and DTLS, ensuring flexibility, interoperability, and compliance with industry standards. Additionally, the integration of network slicing parameters and capability indication mechanisms may enable seamless coordination across network components, enhancing both performance and scalability in modern telecommunications systems.

### Brief description of the Figures

Some examples of apparatuses and/or methods will be described in the following by way of example only, and with reference to the accompanying figures, in which
- Fig. 1A: shows a high-level architecture of a telecommunication system;
- Fig. 1B: shows a more detailed view of communication between a UE and a core network via a RAN;
- Fig. 2A: illustrates one possible interaction between network components, including gNB, AMF, SMF, PCF, and UPF;
- Fig. 2B: illustrates another possible interaction between network components, including gNB, AMF, SMF, PCF, and UPF;
- Fig. 3A,B: illustrate a transition from an IPSec star topology for securing N2 and Xn interfaces to a more evolved architecture featuring eN2 and eAMF;
- Fig. 4: depicts the flow of UP data traffic, illustrating the application of encryption and integrity protection at various points between the UE, gNB, IPSec GW, and UPF;
- Fig. 5A: illustrates a network architecture where UP traffic is routed through an IPSec GW using IPSectunnels as a point-to-point (P2P) networking layer, connecting DUs, CUs, UPFs, and data networks;
- Fig. 5B: illustrates a network architecture without IPSec GW;
- Fig. 6: shows a schematic block diagram of a proposed apparatus for selectively applying cryptographic processing to UP traffic in a telecommunication network according to an embodiment of the present disclosure;
- Fig. 7: shows a schematic flowchart of a proposed method for selectively applying cryptographic processing to UP traffic in a telecommunication network according to an embodiment of the present disclosure
- Fig. 8A: illustrates a protocol stack using integrated IPSec below N3;
- Fig. 8B: illustrates a protocol stack using IPSec on top of N3;
- Fig. 8C: depicts a protocol stack using data payload encryption;
- Fig. 9A: illustrates Selective encryption of traffic on N3;
- Fig. 9B: depicts selective encryption of traffic for one UPF;
- Fig. 9C: illustrates selective encryption of QoS flows within a PDU session;
- Fig. 10A: illustrates a setup for E2E encryption between UE and UPF;
- Fig. 10B: depicts a setup for E2E encryption with intermediate UPF;
- Fig. 11: illustrates a message sequence chart for steering of selective encryption via policies;
- Fig. 12: illustrates a message sequence chart for SM-independent steering;
- Fig. 13: illustrates how DTLS can be layered on GTP-U/SRv6 for PDU sessions, enabling selective encryption and integrity protection, with varying levels of security applied to individual sessions;
- Fig. 14A: depicts a message sequence chart for selective application of cryptographic processing in (R)AN;
- Fig. 14B: depicts a message sequence chart for selective application of cryptographic processing in (R)AN; and
- Fig. 15: depicts a message sequence chart for capability indication.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

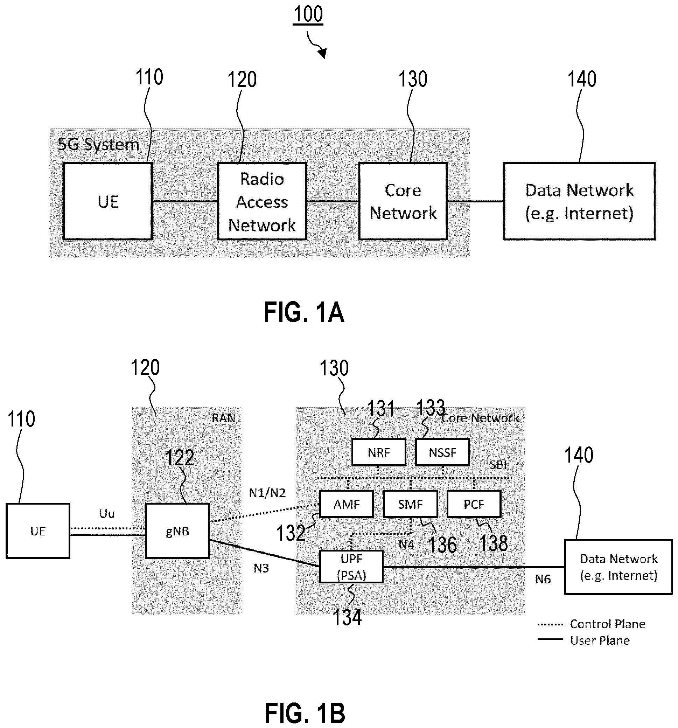

The current paradigm divides the mobile network in two main parts: Access Network (AN) and Core Network (CN). **Fig. 1A** illustrates a high-level architecture of a 5G system 100, including high-level network components and their interconnections.

Fig. 1A shows a UE 110, a RAN 120, a CN 130, and a Data Network (DN) 140, such as the Internet. The UE 110, which can include devices like smartphones, loT sensors, or connected vehicles, serves as an access point for users to connect to the network 100. It may establish a wireless connection with the RAN 120, which may act as a bridge between the user devices and the CN infrastructure. The communication between the UE 110 and the RAN 120 may occur over a 5G New Radio (NR) interface, which may provide high-speed, low-latency connectivity and efficient spectrum utilization.

RAN 120 may comprise base stations, typically referred to as gNodeBs or gNBs, which may handle functions such as radio resource management, data transmission, and enforcing quality of service parameters. RAN 120 may connect to CN 130 through standardized interfaces, such as the NG (Next Generation) interface, enabling seamless data flow and session continuity as users move across coverage areas.

CN 130, which may form a backbone of the 5G system 100, is responsible for functions such as authentication, mobility management, and session management. It may orchestrate efficient routing of traffic to and from the DN 140 while maintaining secure and reliable communication. Within the CN 130, various functional components such as an Access and Mobility Management Function (AMF), a Session Management Function (SMF), and a User Plane Function (UPF) may collaborate to manage signaling, control, and data transmission effectively. In real-world deployments, network functions such as the AMF, the SMF, and the UPF may be implemented as software-based, virtualized network functions running on commercial hardware or specialized network appliances. This virtualization may be made possible through technologies such as Network Functions Virtualization (NFV), containerization and Software-Defined Networking (SDN), which allow network operators to deploy, scale, and manage these functions flexibly and efficiently. CN 130 may also support advanced features such as network slicing, which may allow a logical partitioning of network resources to cater to diverse use cases and service requirements.

DN 140, representing external systems such as the Internet, enterprise networks, or cloud services, may connect to CN 130 through established interfaces. It may facilitate the delivery of content, applications, and services to UE 110, completing the end-to-end communication pathway.

The objective of the 5G architecture is to provide UE 110 with connectivity towards DN 140. Going in more detail, UE 110 may communicate with the RAN 120 via a radio interface, which is used for conveying both signaling information and data traffic. Even if there is a logical separation (logical channels), for obvious reasons both types of data end up being transmitted over the same physical medium. Between RAN 120 and CN 130, signaling information and user data may be separated in different interfaces: N1/N2 and N3 in the 5G case, the former running on a SCTP/NG-AP/NAS protocol stack and the latter running on a UDP/GTP-U protocol stack. This is illustrated in **Fig. 1B****.**

Fig. 1B provides a more detailed representation of the 5G system architecture 100, emphasizing interfaces and network components involved in connecting the UE 110 to the DN 140. It shows some key elements of the 5G RAN 120 and CN 130 and illustrates a separation of the control plane (CP) and user plane (UP) within the network. This representation expands upon Fig. 1A by including explicit protocol stacks and specific network functions, providing a more granular view of the architecture.

In Fig. 1B, UE 110 communicates with RAN 120 through the Uu interface, which supports both signaling and user data. RAN 120 is represented by a gNodeB (gNB) 122, which may manage communication between UE 110 and CN 130. It uses distinct interfaces for control and user planes. The N1 and N2 interfaces link gNB 122 to an AMF 132 in CN 130 for control signaling. These interfaces may operate on a protocol stack comprising SCTP, NG Application Protocol (NG-AP), and Non-Access Stratum (NAS). SCTP (Stream Control Transmission Protocol) is a transport-layer protocol designed to transmit signaling messages reliably between network components. In the 5G system, SCTP is used as the underlying transport protocol for control-plane communication over the N1 and N2 interfaces between RAN 120 and CN 130. NG-AP (Next Generation Application Protocol) is the signaling protocol used on the N2 interface for communication between gNodeB 122 and AMF 132 in CN 130. It supports procedures such as registration, session management, and handover control. NAS (Non-Access Stratum) is a layer of the 5G protocol stack responsible for signaling between UE 110 and CN 130, specifically AMF 132. NAS handles operations such as authentication, mobility management, and session establishment. Together, SCTP, NG-AP, and NAS form a protocol stack used for control-plane signaling, ensuring reliable delivery of signaling information such as mobility events, session setup, and policy updates.

Conversely, user data may be transmitted via the N3 interface, connecting gNB 122 to a UPF 134 through a stack utilizing UDP and GTP-U. UDP (User Datagram Protocol) is a transport-layer protocol used to transmit user-plane data with minimal overhead and without requiring reliable delivery. It is lightweight and well-suited for fast data transfer, as it avoids mechanisms like acknowledgments and retransmissions. GTP-U (GPRS Tunneling Protocol - User Plane) is a tunneling protocol used to carry user data across the N3 interface between gNodeB 122 and UPF 134 in CN 130. It encapsulates data packets, enabling the seamless transfer of user traffic across the 5G network.

CN 130 as depicted in Fig. 1B is segmented into control plane (CP) and user plane (UP) functions, with AMF 132 handling mobility and access management in conjunction with a SMF 136 and Policy Control Function (PCF) 138. AMF 132 communicates with SMF 136 for session management signaling and with PCF 138 for policy control. NAS containers can be forwarded by AMF 132, especially regarding NAS-SM between AMF 132 and other NFs, especially SMF 136. This separation aligns with the 5G architecture's service-based design, allowing modular and flexible management of network functions.

UPF 134 is dedicated to processing and routing user data between gNB 122 and DN 140 via the N6 interface. This architecture reflects the 5G system's decoupling of control and user planes, optimizing both efficiency and scalability. Finally, DN 140 serves as the destination for user traffic, which can include Internet access or private services.

In order to establish a data connection enabling UE 110 to communicate with DN 140, a PDU session may be required. A PDU session is a logical data transport channel terminated at CN 130 that provides connectivity to DN 140. The termination point of a given PDU session (UPF 134 in Fig. 1B and how it works in 5G) may be termed PDU Session Anchor (PSA).

A Network Repository Function (NRF) 131 and Network Slice Selection Function (NSSF) 133 are further components within the 5G Core Network (CN) architecture, as illustrated in Fig. 1B. These functions may support a modular and service-based design of the network by enhancing flexibility and efficiency in managing services and network slicing.

NRF 131 is responsible for maintaining and providing a repository of NFs available within the 5G system. It may enable service discovery by allowing network functions to register their capabilities and availability, as well as query for other NFs required for specific tasks. This may promote efficient interaction between network components and facilitates dynamic, service-oriented connectivity.

NSSF 133 plays a role in the selection and management of network slices. Network slicing allows the 5G system to create virtualized, end-to-end networks tailored for different services or customers. NSSF 133 may determine the appropriate network slice instance for a particular session or service request. It may communicate with other CN functions, such as AMF 132 and SMF 136, to ensure that the selected slice aligns with the user's subscription, service requirements, and the network's operational policies.

Control plane (CP) signaling between UE 110 and CN 130 is based on the NAS protocol. While the NAS protocol is typically defined as terminated at AMF 132, there are some nuances to this statement. The NAS protocol for 4G/EPC was reused and extended. NAS exchanges standard L3 messages. 5G-NAS is an evolution of 4G-NAS and also defines the information element coding in the specification. The path chosen for 5G was to terminate NAS security at a common point and disaggregate the MME functionality.
- AMF 132 terminates NAS security for all NAS of UE 110 and processes Mobility Management (MM)
- For other functions, it forwards NAS payloads over SBI (Service Based Interface) to other NFs
   ∘ SMF 136 for Session Management (SM)
   ∘ Short Message Service Function (SMSF) for SMS
   ∘ PCF 138 for policy
   ∘ Gateway Mobile Location Center (GMLC) for location

SBI refers to Service Based Interface. It uses the Service Based Architecture (SBA) 5GC CP Architecture. SBIs use a newly-defined protocol stack. Instead of GTP-C, it is based on HTTP/2.

The NG-AP between gNodeB 122 and AMF 132 protocol supports both uplink and downlink RAN configuration transfers, which are needed for exchanging configuration information between the (NG-)RAN 120 and the AMF 132 or other network components. The uplink RAN configuration transfer procedure allows a (NG-)RAN node to send information, such as SON (Self-Organizing Network) configuration details, to AMF 132. Upon receiving this information, AMF 132 may forward it to the intended target RAN node or another network entity, depending on the identifiers provided in the transfer message.

In the downlink direction, AMF 132 may initiate the RAN configuration transfer procedure to provide the (NG-)RAN node with updated configuration information, such as SON, SCTP, or GTP endpoint details. This may enable the (NG-)RAN node to make necessary adjustments, including setting up or modifying transport layer associations or handling Xn TNL configuration. Depending on the information elements included in the message, the (NG-)RAN node can use this data for various functions, such as initiating Xn TNL establishment, configuring ACL functionality, or managing IPsec tunnels for traffic protection for the whole node, which may also include the UP traffic.

AMF 132 may also support an AMF Configuration Update procedure to keep the (NG-)RAN node updated with relevant configuration data. This procedure may ensure proper interoperability between the (NG-)RAN 120 and AMF 132 over the NG-C interface by providing details such as supported Public Land Mobile Networks (PLMNs), slice information, SCTP association endpoints, and AMF load conditions. The (NG-)RAN node may acknowledge the receipt of updates and adjust its operations based on the newly provided configuration data. For example, updates may include adding, removing, or modifying transport layer associations with AMF 132 or changing AMF names and identifiers.

Transport layer associations, which are needed for routing traffic between network nodes, may be updated dynamically using the information provided in these procedures. The configuration updates may also facilitate network slicing by allowing the (NG-)RAN node to use the latest PLMN and slice-related data for session and AMF selection. The procedures are designed to ensure flexibility and efficiency in the management of resources while maintaining robust communication between network components, as defined in relevant 3GPP specifications.

Encryption of the NAS security context is based on the K_{NASenc} encryption key, which is generated at both the UE 110 and the network (AMF 132). This key is derived from a long-term key K, which is stored at securely at both ends of the chain (UE 110 and CN 130). At the UE side, it is stored at the Universal Subscriber Identity Module (USIM), whereas an operator may store such a key at an Authentication Credential Repository and Processing Function (ARPF).

The long-term key K is the shared secret from which many other (sub-)keys may be derived and hence it may be stored protected via hardware means. Both the USIM and ARPF are typically hardware-protected, such as implemented by means of a Hardware Security Module (HSM) to ensure tamper-proof and the impossibility to extract stored keys. Rater, instead of outputting K itself, the HSM exposes derived data, such as Authentication Vectors (AVs), such that the key can never be accessed directly.

In addition to K_{NASenc}, the 5GS also supports K_{NASint}, which may be used for integrity protection of NAS messages between UE 110 and AMF 132. Similarly to how the other keys are derived, although for a quite different use case, K_{UPenc}, K_{PPint,}, may be used for encryption and integrity protection respectively of the User Plane (UP) between gNB 122 and UE 110. The different keys may be derived using parameters generated and/or exchanged during the UE registration, and hence cannot be pre-generated.

Solutions presented in this disclosure rely on several aspects regarding management and use of cryptographic keys in 5G systems. When keys are generated through direct or indirect interaction with the long-term or root key, K, the resulting sub-keys may be stored in elements other than the ARPF or the USIM. This is because these sub-keys are designed in such a way that they cannot be used to derive the root key, ensuring enhanced security.

UP encryption relies on a key associated with a specific AMF, known as K_{AMF}, which is directly tied to the key derivation process for Non-Access Stratum (NAS) security. The encryption and integrity protection keys for NAS security, K_{NASenc} and K_{NASint}, are derived from K_{AMF}, creating a secure linkage between AMF 132 and NAS protocols.

K_{AMF} may be updated using a NAS message sequence counter, which means that only one NAS security context can exist per AMF instance at any given time. Additionally, it is possible to derive keys for multiple security contexts from the key used for SEcurity Anchor Function (K_{SEAF}) without requiring a new authentication procedure. For instance, a single authentication procedure over a 3GPP access network can generate keys to establish security for both the 3GPP access and a non-3GPP network, such as an untrusted network accessed through the N3IWF (Non-3GPP Interworking Function). This approach may enhance efficiency and security by reusing authentication results across different network access types.

Modular NAS (or disaggregated NAS/AMF) is a novel approach that is being proposed for 6G. As opposed to the current paradigm in 5G, it may allow direct communication between UE 110 and CN entities. With modular NAS, UE 110 may be capable of employing multiple NAS security contexts. This has the advantage of providing E2E security between UE 110 and CN entities. That is, UE 110 knows with which CN entity it is communicating. Furthermore, it allows more efficient network topologies where CN entities can be geographically distributed.

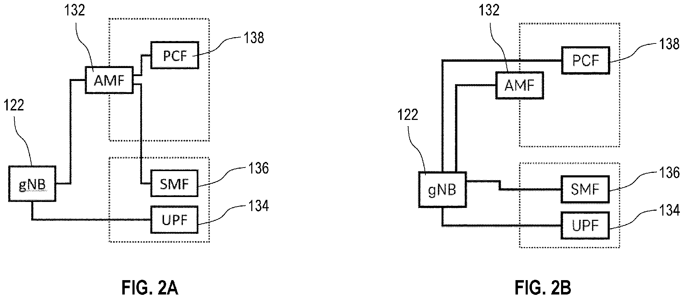

For deployment scenarios, as shown in **Fig. 2A****,** where part of the CN 130 may be deployed in another location (e.g. if session management CP and UP should be placed on customer premises), the CP should be routed towards the AMF 132 to reach the SMF 136. However, the UP can be routed directly toward the edge/customer location.

Fig. 2A illustrates a deployment scenario in which the CN components are distributed between different locations to optimize for specific use cases, such as placing session management CP and UP functions closer to customer premises. Unlike the centralized architecture, Fig. 2A demonstrates a partially decentralized approach, where certain components maintain centralized control, while others are deployed closer to the edge for enhanced performance and reduced latency.

Fig. 2A shows gNB 122 interacting with both centralized AMF 132 and decentralized components, including SMF 136 and UPF 134. AMF 132 remains the primary point for CP signaling, coordinating mobility management and session establishment with other CN functions. The control plane signaling flow begins at gNB 122 and is routed through AMF 132 to reach SMF 136, enabling session management. AMF 132 also interacts with PCF 138 to enforce policies, manage quality of service (QoS), and influence session parameters. It may not be possible to directly route CP directly towards SMF 136. This not only increases CP latency, but also reduces reliability due to the chaining of elements.

In contrast to CP signaling, UP traffic is directly routed from gNB 122 to UPF 134, bypassing AMF 132. UPF 134, in this scenario, may be located closer to customer premises, enabling low-latency data transport and efficient handling of edge computing or private network requirements. This direct routing of user plane traffic allows the system to offload processing from the centralized core, improving scalability and reducing latency for latency-sensitive applications.

Fig. 2A introduces the concept of distributing CN functions across different locations. Fig. 2A illustrates how deployment flexibility can be partially achieved by separating the CP and UP functions and deploying them closer to where they are needed. This approach aligns with edge computing principles and customer-specific use cases, allowing SMF 136 and UPF 134 to be placed on customer premises while maintaining centralized control via AMF 132 and PCF 138.

**Fig. 2B** depicts an alternative deployment scenario, building on the concepts introduced in Fig. 2A, wherein gNB 122 has a direct signaling path to SMF 136, rather than having to route all session-management CP traffic through AMF 132. This contrasts with Fig. 2A, which shows SMF 136 reachable only via the AMF 132. In the architecture of Fig. 2B, gNB 122 can send session-management signaling directly to SMF 136. This may reduce CP "chaining" that occurs when AMF 132 is the sole intermediary for all control messages, potentially lowering latency and alleviating bottlenecks. AMF 132 continues to handle mobility management and overall session establishment with assistance from PCF 138. However, the direct gNB-SMF interface may allow the network to offload some CP transactions from AMF 132. As before, UP traffic flows directly between gNB 122 and UPF 134. Placing UPF 134 closer to the edge or on customer premises remains an option for low-latency or private-network scenarios. This setup shows a more flexible CP distribution. By allowing gNB 122 to communicate directly with SMF 136, Fig. 2B addresses some of the shortcomings of the arrangement shown in Fig. 2A, such as additional hop-induced latency or chaining complexity. In doing so, Fig. 2B can further optimize control-plane scalability and responsiveness in scenarios demanding minimal CP delay or high edge-computing integration.

Additionally, if the protocol stack between the (R)AN 120 and CN 130 (or between RAN nodes) uses HTTP, it is possible to integrate security (e.g. (m)TLS-based) into the communication and remove the need for IPSec tunnels for the CP.

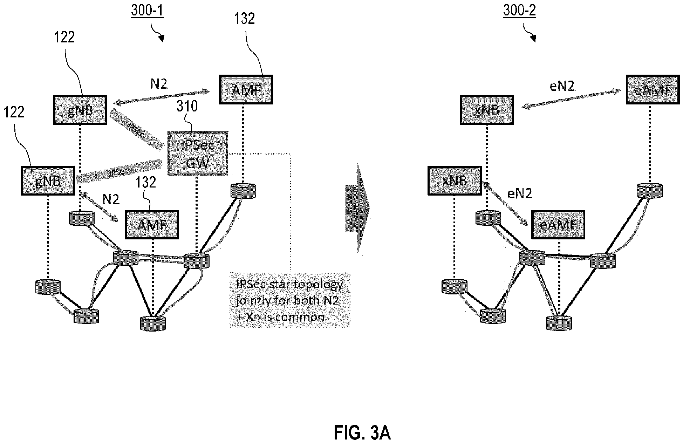

**Fig. 3A** shows two distinct topologies 300-1 and 300-2 side by side, each illustrating a network topology for communication between RAN nodes and CN entities.

In the left topology 300-1, multiple gNB nodes 122 are shown, each connected to an intermediate IPSec gateway 310. From IPSec gateway 310, several links extend to one or more AMFs 132 in the CN, forming a star-like connectivity pattern in which IPSec gateway 310 acts as a central hub for CP traffic. Communication from the gNBs 122 to the AMFs 132 must pass through IPSec gateway 310.

In the left topology 300-1, IPSec gateway 310 provides secure tunneling for all control plane traffic sent over the N2 interface from each gNB 122 to the AMFs 132. This design mandates that all CP messages be routed through the gateway 310, creating a star topology that centralizes control plane security but also complicates re-routing and requires careful management of both the transport layer and the security layer. In this scenario, any change in the target AMF or network topology necessitates updates to the IPSec configuration, increasing operational overhead.

In contrast, the right topology 300-2 replaces the IPSec gateway with a more direct mesh-like interconnection, illustrated by multiple lines linking newly labeled RAN nodes ("xNB") directly to newly labeled core network elements ("eAMF") without the intermediate IPSec gateway. The RAN nodes each have direct "eN2" interfaces to the core network elements.

In the right topology 300-2 it is shown how removing the IPSec gateway in favor of endpoint-to-endpoint TLS-based encryption (or other transport-level security) may enable direct IP-based routing of N2 traffic. Each RAN node may communicate directly with the core network elements without an intermediate security hub. This topology may improve flexibility by allowing the transport network to redirect or reroute CP traffic using standard IP routing methods, rather than maintaining a separate star-shaped IPSec tunnel configuration. Consequently, the functional outcome may be a more service-based N2 interface, where network design is streamlined, security is handled at the endpoints, and the overhead of configuring and managing a central IPSec layer is removed.

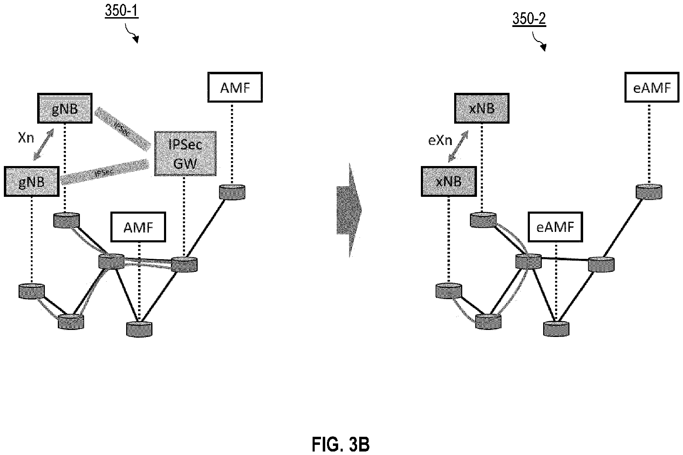

**Fig. 3B** shows two distinct topologies 350-1 and 350-2, each depicting a network topology for the Xn interface among RAN nodes.

In the left topology 350-1, each gNB 122 may use an IPSec tunnel to encrypt traffic sent to the CN, and any Xn interface traffic between gNBs may also be directed through IPSec gateway 310. Because of this design, traffic experiences an additional encryption-decryption stage, effectively introducing complexity and additional overhead for Xn traffic. For the CP, the CN, represented by multiple AMFs 132 and IPSec gateway 310, acts as a centralized security hub, enforcing I Psec. This approach results in the Xn interface being tied to the same star topology used for N2 traffic and forces re-routing through the core network locations, where the IPSec gateway is typically located.

The right topology 350-2 illustrates a service-based Xn interface, where each xNB can directly exchange control plane messages with other xNBs and with eAMF nodes without relying on an IPSec gateway. Instead, TLS-based endpoint encryption may be applied, simplifying network design by allowing IP routing to manage traffic flows independently of a separate IPsec layer. This direct "eXn" communication may reduce the number of encryption-decryption steps and offers a more flexible mesh topology, improving performance while maintaining secure connections between RAN nodes and the CN.

The UP in a 5G system can be described as a stack of protocols that begins at UE 110 and extends toward DN 140. From UE 110 to the radio unit, data may pass through a set of RAN protocol layers that includes PDCP (Packet Data Convergence Protocol), RLC (Radio Link Control), MAC (Medium Access Control), and PHY (Physical Layer), with SOAP (Service Data Adaptation Protocol) handling QoS (Quality of Service) marking. The user plane can include Open Fronthaul between the radio unit and a distributed unit, and an F1-U interface between the distributed unit and a centralized unit, all of which manage scheduling, framing, and lower-level transmission.

Farther along the path, a significant portion of the user plane traffic is transported by tunnels using GTP-U, typically layered on UDP/IP and lower-layer protocols. Each tunnel is identified by a Tunnel Endpoint Identifier (TEID) to enable multiplexing and demultiplexing of packets, and extension headers can carry specialized data such as NR RAN container information. This tunneling approach covers interfaces like N3, connecting the RAN side to a UPF, N9 between UPFs, and eventually N6 to reach external data networks. Alongside GTP-U, the lower layers of the radio network may employ protocols such as Ethernet, eCPRI (Enhanced Common Public Radio Interface), or RoE (Radio over Ethernet), depending on the level of disaggregation, for tasks such as synchronization or fronthaul transport. Fronthaul refers to the network segment between the radio unit (RU) and the distributed unit (DU) in disaggregated RAN architectures. It is responsible for carrying user and control plane data as well as synchronization signals. Although GTP-U is central to the 5G user plane, the system remains flexible enough to carry IPv4, IPv6, and Ethernet payloads, ensuring that different use cases and traffic types can be accommodated efficiently.

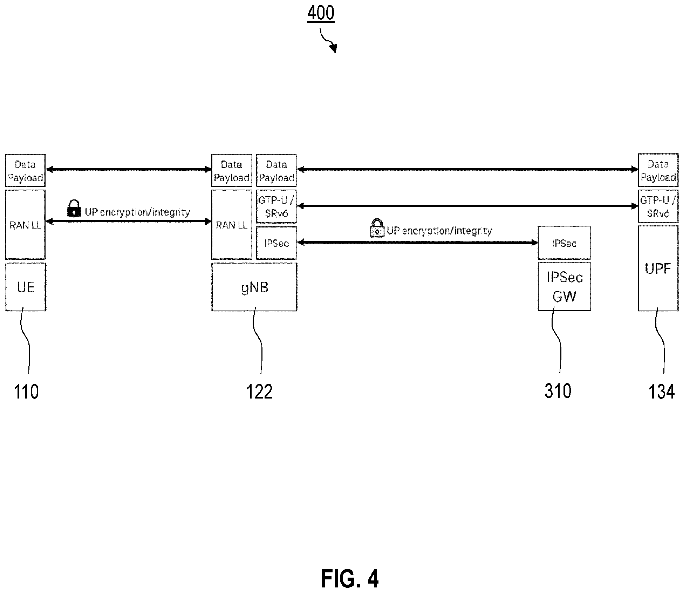

Currently, it is common to use IPSec for providing secure connectivity between RAN 120 and CN 130. For the UP, this may result in a protocol stack 400 as shown in **Fig. 4****.**

Fig. 4 shows four main vertical blocks arranged from left to right, each representing a different node or function in the UP path. The first block on the left is UE 110 and contains two stacked layers labeled Data Payload and RAN LL, indicating the payload and the radio access lower layers. The second block, the gNB 122, contains four stacked layers labeled Data Payload, GTP-U/SRv6, RAN LL, and IPSec. SRv6 is shown as a possible alternative to GTP-U for transporting tunneled UP supporting the same functionality as GTP-U. A lock symbol is placed in a path between the gNB 122 and a third block representing IPSec GW 310, which itself has a layer labeled IPSec. The fourth block on the right, the UPF 134, includes two stacked layers labeled Data Payload and GTP-U/SRv6. The overall layout suggests a flow of user plane traffic from UE 110 through gNB 122, across an IPSec-secured interface, and ultimately to UPF 134.

UE 110 may produce a data payload that may be processed by the RAN lower layers in the UE 110. The gNB 122 may receive that payload via its RAN lower layers and prepare the user plane traffic for transport using either GTP-U or SRv6. The gNB 122 may also encapsulate the traffic with IPSec so that it can traverse a secure link toward IPSec gateway 310, as indicated by the lock symbol. IPSec gateway 310 may function as endpoint for the gNB's IPSec tunnel, performing decryption or encryption as necessary, and then relay the user plane packets to UPF 134. On the UPF side, the traffic may again be identified by its GTP-U or SRv6 headers and ultimately delivered as the data payload. Thus, Fig. 4 illustrates how IPSec is commonly interposed between the gNB 122 and the CN 130, with GTP-U or SRv6 serving as the primary user plane tunneling protocol both before and after the IPSec tunnel.

While currently GTP-U is used for UP transport in 3GPP systems, other transport protocol such asSRv6 could be used instead. Nevertheless, the same situation arises, and that is IPSec being used as the underlying transport layer.

It might be possible with 6G to not need IPSec tunnels for the CP, such that the security can be integrated into the CP protocol stacks. However, such objective should also be realizable for the UP. Otherwise, the IPSec layer cannot be removed because it will be needed for the UP. Additionally, since data throughput is increasing and encryption is computationally resource-intensive, and thus also energy-intensive, solutions are needed such that encryption and/or other cryptographic processing can be applied to only traffic that requires it. In such a way,
- resources can be selectively efficiently used to protect traffic that needs to be protected
- routing in the Transport Network (TN) can be applied to efficiently route the traffic (IPSec tunnels are typically point-to-point and do not allow the TN to be used efficiently for routing traffic via the best path

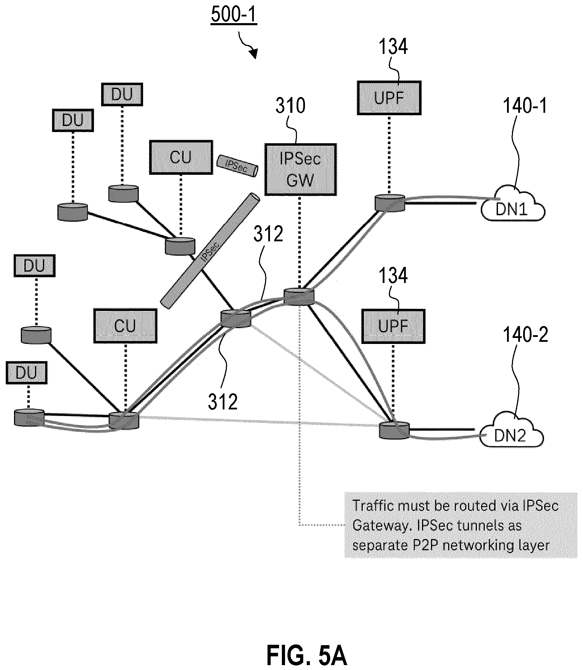

In this regard, **Fig. 5A** depicts the current situation taking into account the deployment of disaggregate RAN components (the RU is for brevety not depicted in the picture).

Fig. 5A depicts a network layout 500-1 with multiple distributed units, labeled "DU". One or more centralized units, labeled "CU," appear closer to the center, and an IPSec gateway 310, labeled "IPSec GW", is positioned between the CU and two UPF nodes 134 shown on the right side. In this arrangement, UP data may originate at the DUs, travel through a CU, and is forced through the IPSec gateway 310 before reaching any of the UPFs 134, ensuring that the IPSec layer encrypts or decrypts the traffic. Lines 312 represent these IPSec tunnels, functioning as point-to-point networking paths that carry the data securely but also constrain routing flexibility in the underlying transport network. Because the tunnels 312 create a separate point-to-point layer, any traffic requiring encryption or decryption must follow the links leading through the IPSec gateway 310 rather than being dynamically routed for optimal transport. This illustrates the current situation in which IPSec gateway 310 serves as a necessary encryption midpoint, limiting the network's ability to route traffic freely and expending additional resources to encrypt increasing data volumes. It additionally illustrates how the trend of disaggregation further increases the complexity challenge of managing an IPSec-based overlay network for communication between network components.

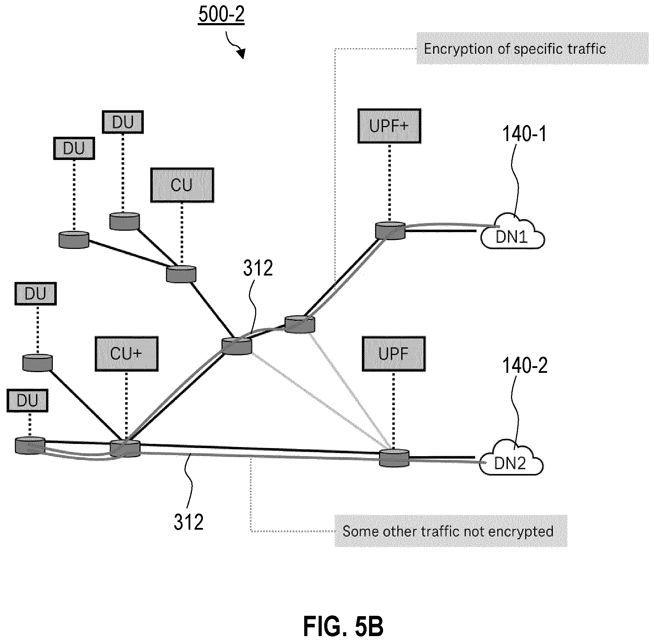

A desired target picture is one where it is possible to selectively apply encryption to UP and also where the TN can route the traffic. In **Fig. 5B****,** multiple DUs are shown, with at least one CU. A user plane path 312 is flowing from a DU on the lower left, through CU+ in the middle, and then dividing toward two UPs, labeled UPF and UPF+, on the right. The DU nodes represent radio access components that forward UP traffic to the CUs. The CU node at the center may handle standard RAN processing, while the CU+ node may further classify or apply selective encryption rules. From CU+, traffic requiring additional encryption may be carried along user plane path 312 to the UPF. Other flows, which do not require this level of security, continue along the same or a parallel path 312 toward the lower UPF without encryption. By structuring the UP in this way, the network may allow the transport network to route traffic based on performance or availability, while also supporting selective encryption of specific flows, ensuring that sensitive or critical data receives appropriate protection. This arrangement seeks to achieve flexible traffic routing through the transport network while enabling per-slice, DNN, flow or per-session encryption where required.

Solutions proposed herein may provide means for selective UP encryption at different levels and provide different benefits compared to the current state of the art, where UP encryption/integrity is only possible hop-by-hop between UE and gNB. We consider as "encryption" the use of cryptographic methods of encryption and/or integrity protection of the UP.

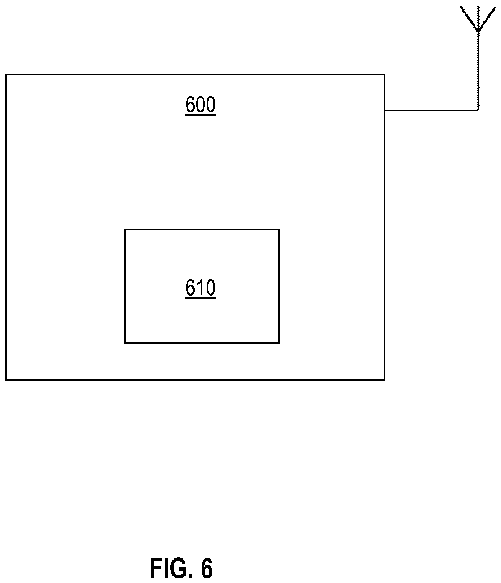

**Fig. 6** shows a schematic block diagram of a proposed apparatus 600 for selectively applying cryptographic processing to UP traffic in a telecommunication network according to an embodiment of the present disclosure.

The apparatus 600 comprises processing circuitry 610 which is configured to receive cryptographic policy information indicative of cryptographic policies for at least one portion of UP traffic. The processing circuitry 610 may be implemented using a combination of hardware and software components designed to handle cryptographic policy processing. Hardware implementation could involve specialized processors such as Application-Specific Integrated Circuits (ASICs) or Field-Programmable Gate Arrays (FPGAs). These components could be optimized for executing cryptographic algorithms and policy enforcement tasks at high speeds while minimizing latency. They could also include secure storage for sensitive data like encryption keys and cryptographic policies. On the software side, processing circuitry 610 could use firmware or dedicated software modules running on a general-purpose processor or a System-on-Chip (SoC). This software could handle tasks such as interpreting cryptographic policy information, determining applicable security measures, and applying encryption or integrity protection to the appropriate portions of user-plane traffic. Processing circuitry 810 could also integrate secure communication interfaces to receive cryptographic policy information from network functions, such as the SMF or PCF, ensuring compliance with dynamically updated network policies. Additionally, it could include mechanisms for monitoring and logging cryptographic operations to facilitate troubleshooting and auditing while maintaining security and operational integrity.

Cryptographic policy information indicative of cryptographic policies for at least one portion of UP traffic may refer to data that may define how security measures, such as encryption or integrity protection, should be applied to specific UP traffic in a telecommunication network. This information may serve as a guideline for securing portions of the data flow, ensuring that sensitive information is protected according to network requirements or user preferences. Cryptographic policy information may refer to a set of rules or parameters that specify the type and extent of cryptographic processing applied to UP traffic. These policies may include directives for applying encryption algorithms, performing integrity checks, or both, depending on the type of traffic and its associated requirements. The information may also identify which portions of the traffic are subject to these policies, such as specific sessions, flows, or categories of data, ensuring that security measures are dynamically tailored to different network conditions or user needs. Cryptographic policy information may comprise detailed functional and structural data used by processing circuitry 610 to apply specific cryptographic operations to UP traffic. This information may include identifiers for encryption protocols (e.g., AES or IPsec), keys or key derivation methods, and parameters for QoS flows or PDU sessions. It may also specify detailed mappings between traffic types and security requirements, such as associating a particular QoS flow with an encryption algorithm or specifying key lengths and integrity protection parameters for individual data segments. The cryptographic policy information may be received from core network elements like the SMF or PCF and may be interpreted by apparatus 600 to dynamically enforce tailored security measures for UP traffic.

Further, processing circuitry 610 is configured to determine, based on the cryptographic policy information, whether to apply cryptographic processing to the at least one portion of the UP traffic. The cryptographic processing comprises at least one of encryption or integrity protection. Determining whether to apply cryptographic processing may involve making a decision based on the cryptographic policies about whether security measures should be applied to specific portions of UP traffic. This may ensure that sensitive or high-priority data is protected appropriately while allowing less critical data to bypass unnecessary processing, thereby optimizing network performance and maintaining data security. This feature may involve analyzing the cryptographic policy information to evaluate whether encryption, integrity protection, or both should be applied to particular portions of UP traffic. The analysis may take into account factors such as the type of data, its sensitivity, the associated QoS requirements, and network conditions. Based on these criteria, the processing circuitry 610 may identify the traffic segments that require cryptographic processing and apply the corresponding security measures dynamically to ensure compliance with the policies while preserving efficiency. Processing circuitry 610 may implement this functionality by interpreting cryptographic policy information received from network elements, such as the SMF or PCF, for example. This information may specify parameters such as the encryption algorithm to be used, key lengths, or integrity protection requirements for specific PDU sessions or QoS flows. The circuitry 610 may process this data to determine if the user-plane traffic matches the criteria for cryptographic processing. If it does, the circuitry 610 may execute the specified cryptographic operations, such as encrypting the payload using AES or applying integrity protection with HMAC. If no processing is required, the traffic may bypass these operations, ensuring efficient and policy-driven data handling.

Further, processing circuitry 610 is configured to selectively apply the cryptographic processing to the portion of the UP traffic at a granularity of at least one of an interface, a tunnel, a PDU session, or a QoS flow. Selectively applying cryptographic processing to a portion of UP traffic may involve dynamically determining and enforcing security measures for specific segments of network traffic. This may ensure that cryptographic processing, such as encryption or integrity protection, is applied only where needed, optimizing balance between security and network performance. This feature may enable processing circuitry 610 to enforce cryptographic policies at different levels of granularity, such as interfaces, tunnels, sessions, or flows. For example, it may apply encryption to an entire interface connecting network components, secure specific tunnels used for data transmission, or protect individual PDU sessions. Similarly, the feature can target specific QoS flows within a session, ensuring that traffic requiring high security receives appropriate protection, while less sensitive traffic is handled more efficiently. The granularity may allow the apparatus 600 to adapt to varying security requirements across different network scenarios and use cases. Processing circuitry 610 may use cryptographic policy information to identify traffic segments that require security measures and apply these measures accordingly. For instance, the circuitry 610 may secure an interface, such as the N3 interface, by establishing an IPsec tunnel. It may also encrypt specific PDU sessions using a defined algorithm, such as AES-256, or apply integrity protection using HMAC-SHA-256. Additionally, for QoS flows, the circuitry 610 may map individual flows to corresponding cryptographic parameters, ensuring tailored security for traffic such as voice, video, or data streams. This may ensure that security measures are both effective and resource-efficient, providing robust protection where necessary without compromising overall network performance.

The apparatus 600 may be implemented at various nodes in a mobile telecommunication network, depending on the specific security and operational requirements. One potential implementation is within the UPF. In this case, the apparatus 600 could apply encryption and integrity protection to user data being routed to and from the DN. This may ensure that data remains secure as it traverses external or untrusted networks. Another possible implementation is at the gNB or elements thereof, such as a CU or DU. The gNB serves as the interface between the UE and the CN. The apparatus in this location could handle cryptographic processing for user data flowing through the N3 interface, ensuring secure transmission between the RAN 120 and the UPF 134. Similarly, the apparatus in this location could handle cryptographic processing for user data flowing through the Xn or F1 interfaces. This may be useful in scenarios where RAN 120 handles sensitive data or is exposed to potential security threats. The apparatus 600 could also be deployed within AMF 132 or SMF nodes 136 in CN 130, where it could manage cryptographic policy enforcement and key distribution. This may ensure that encryption is applied according to the network's policies and the subscriber's requirements, maintaining consistent security standards across all sessions. Additionally, in scenarios involving non-3GPP access, the apparatus 600 could be integrated into the N3IWF (Non-3GPP Interworking Function). Here, it could secure user-plane traffic as it transitions between non-3GPP access networks, such as Wi-Fi, and the CN. Additionally, in scenarios involving Wireless-Wireline convergence, WWC, the apparatus 600 could be integrated into the AGF (Access Gateway Function). Here, it could secure user-plane traffic as it transitions between wireline networks, such as fixed internet, and the CN.

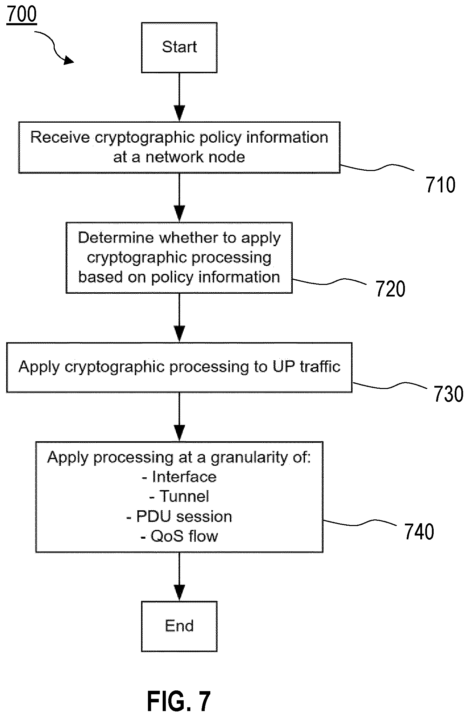

The skilled person will appreciate that apparatus 600 can carry out a method 700 of selectively applying cryptographic processing to UP traffic as depicted in Fig. 7.

Method 700 includes receiving 710, at a network node, cryptographic policy information indicative of cryptographic policies for at least one portion of UP traffic. Method 700 further includes determining 720, based on the cryptographic policy information, whether to apply 730 cryptographic processing to the at least one portion of the UP traffic, wherein the cryptographic processing comprises at least one of encryption or integrity protection. Method 700 further includes selectively applying 740 the cryptographic processing to the portion of the UP traffic at a granularity of at least one of an interface, a tunnel, a PDU session, or a QoS flow.

Method 700 can be implemented as a computer-implemented method because its acts can be performed by processing circuitry or computational components within a network node, such as a gNB, UPF, or other elements in a mobile telecommunications network. The method's steps, including receiving, determining, and selectively applying cryptographic processing, can be translated into software or firmware instructions executed by one or more processors. The step of receiving cryptographic policy information 710 may involve the network node collecting data through communication interfaces. These interfaces may be controlled by software modules that interpret incoming cryptographic policy information transmitted from other network functions, such as the PCF or the SMF. This reception process may be automated using standard communication protocols and data parsing routines. The step of determining whether to apply cryptographic processing 720 may involve analyzing the received cryptographic policy information. This analysis can be implemented using algorithms programmed into the network node's software, which assess factors such as the traffic type, security requirements, or network conditions. The algorithms can execute decision-making logic based on predefined rules or policies stored in the system's memory. The step of selectively applying cryptographic processing 740 may entail the execution of cryptographic operations, such as encryption or integrity protection, on specific portions of user-plane traffic. This selective application is directed by the analyzed policy information and involves invoking cryptographic libraries or hardware acceleration modules to perform the processing. These operations can be applied dynamically to different granularities, such as interfaces, tunnels, PDU sessions, or QoS flows, based on the software's real-time assessment.

As part of the propose proposed solutions, different protocol stacks for UP encryption are presented that can be supported between gNB 122 and CN 130 on the N3 interface. Instead of terminating the encryption at an IPSec gateway, it is proposed to integrate the IPSec layer into the UPF 134 and gNB's 122 UP protocol stack. This approach may have the advantage of deploying the encryption endpoint where the UP traffic is terminated instead of at an intermediate point. Instead of building a parallel network topology, the security tunneling is performed between the actual traffic endpoints and can thus be optimally routed by the TN.

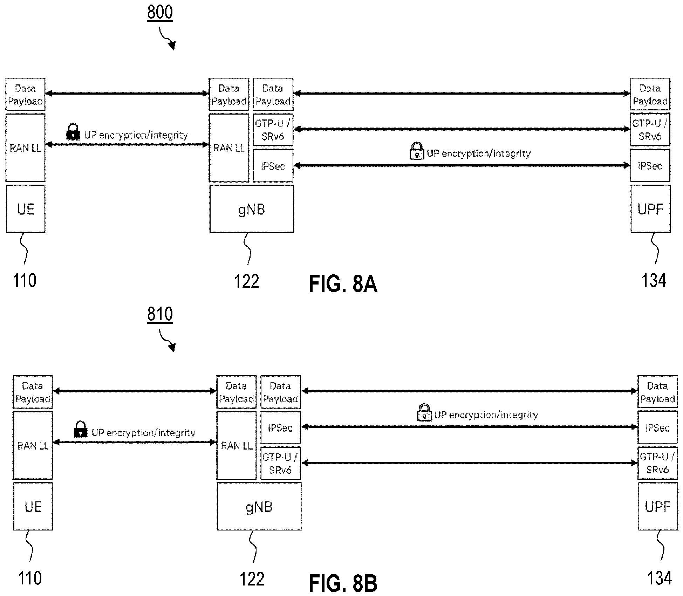

Fig. 8A shows three main entities arranged from left to right, UE 110 on the left, gNB 122 in the center, and UPF 134 on the right. Each entity uses a stack of different protocol layers.

The UE 110 has an upper layer labeled Data Payload and a lower layer labeled RAN LL, illustrating that the radio access lower layers carry the UE's data payload. The gNB 122 shows four layers: Data Payload at the top, GTP-U or SRv6 in the layer below, then RAN LL, and an IPSec layer at the bottom. A lock symbol between the gNB 122 and the UPF 134 symbolizes a secure transmission path. The UPF 134 uses three layers: Data Payload at the top, GTP-U or SRv6 in the middle, and IPSec at the bottom. Fig. 8A illustrates that IPSec may be integrated directly into both the gNB's and the UPF's user plane stacks.

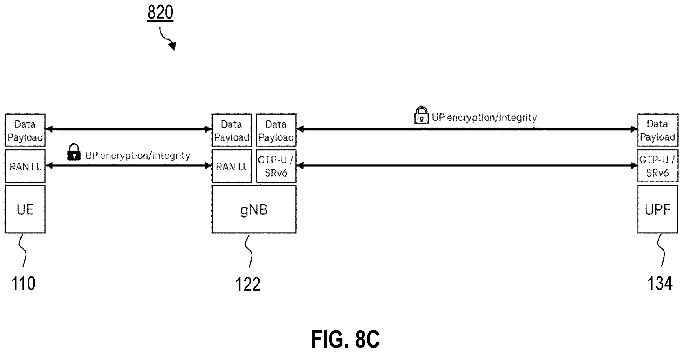

In the embodiment of Fig. 8, the UE 110 may generate application or user data, which is processed by the radio access lower layers before reaching the gNB 122. The gNB 122, having an embedded IPSec layer, may encrypt or otherwise protect the UP packets as they transition to the transport network. These packets may carry GTP-U or SRv6 headers to facilitate tunneling on the N3 interface, but instead of terminating IPSec at a separate gateway, the security endpoint lies within the gNB 122 itself. On the receiving side, the UPF 134 may be likewise equipped with an IPSec layer, allowing it to terminate the secure tunnel directly and handle decryption without any intermediate IPSec gateway. By placing IPSec in the endpoints, the network can use optimal routing in the transport network, since the IPSec tunnel exists only where the UP traffic is originated and terminated.

This approach, however, may make it difficult to encrypt parts of the traffic over an N3 interface. Thus, it is also proposed a further improved protocol stack in which the IPSec tunnel is built on top of the N3 interface. This approach may have the further advantage that different flows withing a single N3 interface can be differently encrypted (or not encrypted at all).

In the embodiment illustrated in **Fig. 8B****,** the IPSec layer is placed above the GTP-U or SRv6 layer, rather than being placed underneath as in Fig. 8A. This layout may make the IPSec tunnel terminate at the gNB 122 and the UPF 134 after the user plane tunneling has already been established, so the security layer does not run underneath GTP-U or SRv6 but instead encapsulates the tunneled data. By contrast, in Fig. 8A, IPSec is shown as part of the same user plane protocol stack in the gNB 122 and the UPF 134, making it more challenging to separately encrypt or leave unencrypted different data flows traversing the same interface. The embodiment illustrated in Fig.8B may allow multiple flows on the same N3 interface to receive different levels or modes of encryption. Certain data flows requiring heightened security can be passed through an IPSec tunnel, while other flows can remain unencrypted or use different protection mechanisms. This more granular approach to cryptographic protection can reduce processing overhead for traffic that does not need encryption, and it may also improve flexibility in how the transport network routes or handles different types of user plane traffic.

The tunnel may provide addressing functionality that may be, in this case, not useful as it is provided by the lower layers (e.g. GTP-U). For that, a further improvement on the proposed protocol stack may be a direct encryption (without an IPSec layer) of the UP within an N3 interface. Existing methods that may be considered are:
- Use of K_{gNB}, K_{UP} or other similar keys
- Derivation of other keys in a similar fashion
- (m)TLS
- DTLS

The use of DTLS, especially the flexible application of DTLS may be considered an advantage of some embodiments. By using DTLS instead of IPSec, it may be possible to efficiently nest security protocols without incurring into TCP meltdown issues. This mode of operation may provide the most flexibility in terms of encryption. A single N3 interface can thus contain encrypted and/or unencrypted UP as needed.

In the embodiment illustrated in **Fig. 8C****,** there is no dedicated IPSec layer in the UP protocol stack between the gNB 122 and the UPF 34, in contrast to Figs. 8A and 8B, where IPSec appears either as an integrated layer (Fig. 8A) or as a tunnel above GTP-U/SRv6 (Fig. 8B). Instead, Fig. 8C shows direct encryption or integrity protection applied within the user plane itself. This arrangement can be achieved using key-based methods (such as K_{gNB} or K_{UP}), (m)TLS, or DTLS. This embodiment no longer relies on the IPSec tunneling layer for security. By omitting an extra IP-layer tunnel, the system gains flexibility to encrypt or leave unencrypted different user plane flows within the same N3 interface. This approach may also allow simpler nesting of security protocols (particularly when using DTLS) without incurring TCP meltdown issues. As a result, the system may preserve the addressing already provided by GTP-U or SRv6 while still protecting selected data flows as needed, reducing overhead and improving the efficiency of transport network routing.

Some embodiments of the proposed protocol stacks provide means to selectively encrypt data within a N3, such that (for example) only specific PDU sessions are encrypted (e.g. sessions containing IMS signaling), while applications using TLS on application level can request or be assigned an unencrypted PDU session. Analogously, an additional layer of encryption can be applied to specific PDU sessions regardless of their content if deemed necessary be the network and/or application.

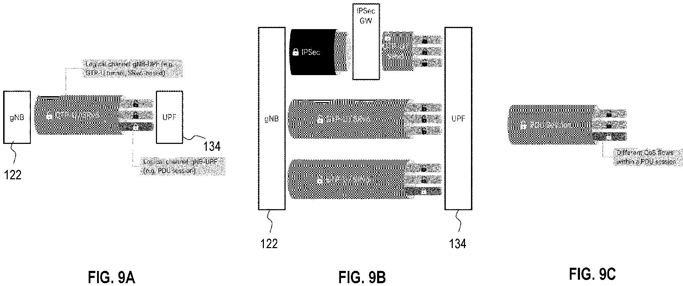

**Fig. 9A** shows a gNB 122 on the left and a UPF 134 on the right, connected by GTP-U/SRv6-based logical channel. Within this channel, multiple smaller channels are illustrated, each marked with a lock icon to indicate an encrypted flow. The gNB 122 may originate or forward UP traffic onto different logical channels, each corresponding to a PDU session or flow, and these channels traverse the GTP-U or SRv6 tunnel. Some of these channels may carry encrypted traffic, shown by the lock icons, while others can remain unencrypted based on application or network policy. This embodiment may enable selective encryption at session or flow level, allowing, for example, IMS signaling to be protected with additional cryptographic layers, while traffic already secured at the application level, such as TLS traffic, can be transmitted without redundant encryption. The UPF 134 on the right terminates each logical channel, decrypting only those flows marked for encryption and passing along any unencrypted sessions as needed. By structuring the UP in this manner, the network may provide granular control over which PDU sessions receive additional security, optimizing resource usage and allowing flexible routing in the transport network.

Similarly, a UPF 134 can thus support multiple encryption modes for UP, such as:
- Traffic using a legacy IPSec tunnel (no difference for the UPF but the gNB is typically made aware of the IPSec endpoint information)
- Unencrypted N3
- Partially encrypted N3
- Fully encrypted N3 (not shown in the picture)

In **Fig. 9B****,** legacy IPsec is shown as a separate tunnel option alongside one or more GTP-U/SRv6 tunnels, whereas Fig. 9A presents a more uniform tunnel configuration. In Fig. 9B, the IPsec tunnel appears on top, terminating at an external IPsec gateway, while multiple GTP-U or SRv6 tunnels below it may be capable of selectively encrypting only certain PDU sessions. By contrast, Fig. 9A illustrates a single tunnel approach without showing concurrent IPsec and GTP-U/SRv6 modes.

In the embodiment illustrated in Fig. 9C, the UPF 134 can accommodate different encryption modes in parallel. One tunnel can use legacy IPsec for backward compatibility or specific operator requirements, while other tunnels can selectively encrypt only certain flows, leaving other traffic unencrypted. This arrangement may allow the network to continue supporting IPsec-based deployments, but also enable partial or fully integrated encryption within GTP-U or SRv6, giving an operator flexibility to optimize resource usage, routing, and security levels according to each service's needs.

**Fig. 9C** schematically illustrates a PDU session, shown as a high-level container for UP traffic. Nested within the PDU session are multiple individual QoS flows, each labeled with a lock icon. Each QoS flow may have a different level of encryption or none at all. The PDU session may serve as an overall conduit for user data, while each smaller sub-flow corresponds to a QoS flow with its own quality-of-service parameters and potential encryption requirements. By assigning a separate encryption configuration to each flow, the network can selectively apply or skip cryptographic processing based on policy, application needs, or QoS demands. This granularity may allow sensitive services to be encrypted, while other traffic in the same PDU session remains unencrypted, thereby optimizing both security and resource usage.

Some embodiments may further consider terminating the encryption of the UP not at the gNB 122 but at the UE 110. In this case, the same protocol stack used for data payload encryption can be used. Furthermore, such approach may have the additional advantage of allowing the gNB 122 to save resources by not applying encryption between UE 110 and gNB 122, hence E2E the system is using less resources (1x encryption/decryption can be saved). Alternatively, if the UE-gNB encryption is kept, the advantage is an additional layer of security and/or integrity protection.

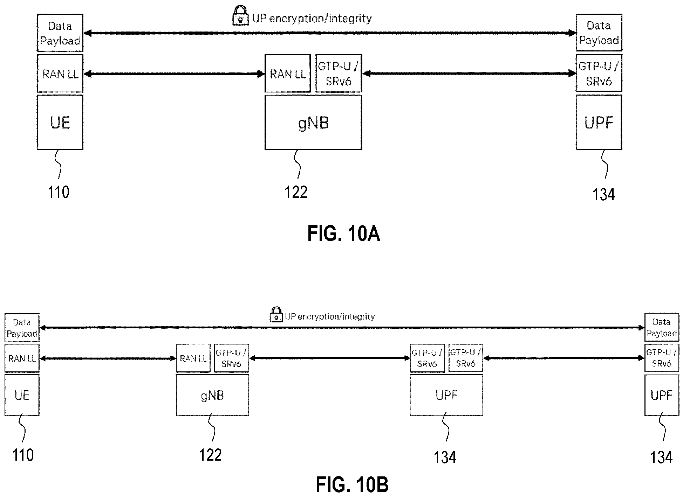

In the setup illustrated in **Fig. 10A****,** the UE 110 may generate and encrypt the UP data with an end-to-end security mechanism. The gNB 122 may simply forward the encrypted traffic as a transparent relay, without expending resources to perform decryption or re-encryption. Consequently, the encrypted payload may arrive at the UPF 134, where it may be finally decrypted. This approach may conserve processing overhead at the gNB 122 by avoiding the typical encryption or decryption step at the radio access node, offering a net reduction in total encryption cycles needed. Alternatively, if network policy dictates, encryption can still be maintained between the UE 110 and the gNB 122, creating an additional layer of security on top of end-to-end encryption between the UE 110 and the UPF 134.

The embodiment of Fig. 10A can be further extended such that multiple UPFs can be supported, such that intermediate UPFs (e.g. UL-CL, I-UPF or UPF in V-PLMN) are not aware of the content of traversing traffic.

**Fig. 10B** shows a UE 110 passing traffic to the gNB 122, which then forwards that traffic to an intermediate UPF 134-1, and finally onward to a second UPF 134-2. Further, an end-to-end secure path is shown between UE 110 and second UPF 134-2 that bypasses decryption at the intermediate UPF. The UE 110 may generate and encrypt UP data, and the gNB 122 may relay it without altering the encrypted payload. The first UPF 134-1, located midway, may inspect only outer transport headers and forward the still-encrypted data to the next UPF 134-2. Because the intermediate UPF 134-1 may lack the keys or mechanism to decrypt, it may remain unaware of the traffic's contents. In doing so, the network may support multiple UPFs in the path, such as for local breakout or traffic steering, but preserve an unbroken encryption context from the UE 110 to the second UPF 134-2. This design may ensure that intermediate UPFs can handle routing and resource control without having visibility of the user data, thereby enhancing privacy and security for end-to-end traffic flows.

An important aspect of selective UP encryption may be that of steering. Here, "steering" refers to the process of determining and directing how, where, and when encryption or other cryptographic measures are applied to UP traffic. Steering may involve dynamically making decisions based on predefined policies, subscription data, network conditions, or specific requirements, and ensuring that these decisions are enforced appropriately across different parts of the network. For instance, steering may involve identifying particular data flows, such as PDU sessions, QoS flows, or traffic types, and deciding whether encryption or integrity protection is necessary for each flow. It can also involve selecting the specific cryptographic protocols, algorithms, or parameters to be applied. Steering may ensure that encryption is applied only where needed, such as for sensitive or high-priority data, while minimizing unnecessary overhead for less critical traffic. In essence, steering may provide a mechanism for the network to dynamically adapt cryptographic processing to meet security requirements while maintaining optimal performance and resource efficiency.

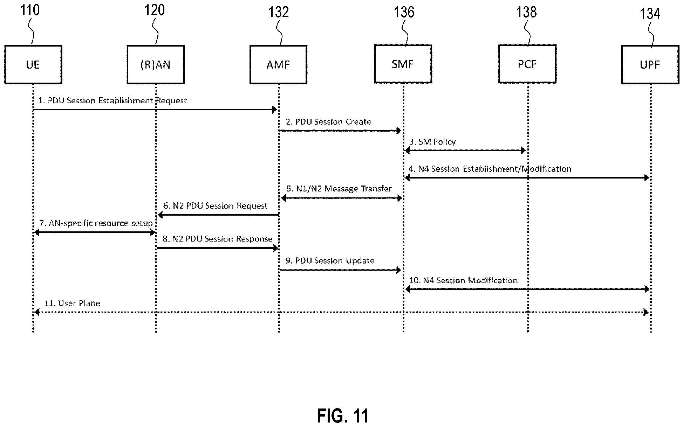

In order for selective UP encryption to be able to be dynamically deployable, a steering mechanism is favorable. A proposed solution contains enhancements to policy-related procedures to support selective encryption. **Fig. 11** provides an overview of the current procedure for establishing a PDU session, as well as the proposed enhancements.

The message sequence chart in Fig. 11 depicts the process of establishing a PDU session in a mobile communications network, showing the interactions between the UE 110, RAN 120, and CN components. It illustrates the flow of messages required for setting up a PDU session while emphasizing the handling and steering of UP-encryption-related information, which plays an important role in selective encryption.

The process begins when the UE 110 initiates a PDU session establishment request, which may include UP-encryption-related information if the encryption is requested by the UE 110 or an application. This information could pertain to specific PDU sessions, QoS flows, or other parameters, and may be relayed by the RAN 120 to the CN (AMF 132). For gNB-requested UP encryption, the RAN 120 may incorporate UP-encryption-related information directly into the PDU session establishment request before forwarding it to the CN.

Within the CN, AMF 132 may process the PDU session request and communicate with SMF 136 to establish the session. For network-triggered selective UP encryption, SMF 136 may determine the encryption requirements either from its own configuration, from subscription data associated with the UE 110 retrieved from UDM, or from PCF 138. In the latter case, PCF 138 may receive this information based on its configuration or from SM policies retrieved from UDR. As a result, PCF 138 may become aware of the UP-encryption-related information and may ensure that it is communicated back to SMF 136.

The UP-encryption-related information may encompass a variety of parameters, including PDU session and QoS flow details, encryption types (such as integrity protection or confidentiality), cryptographic algorithms and associated parameters, and endpoint information like the UE's SUPI, PDU session ID, IP or MAC address, application identifiers, and the IP addresses of the gNB 122 and UPF 134, for example. This may ensure that encryption is applied accurately and in accordance with network policies.

SMF 136 may use this information to initiate an N4 session establishment or modification procedure with UPF 134, which is responsible for applying the selective encryption to the user-plane traffic. UPF 134 may enforce the policies, ensuring that encryption or integrity protection is applied to the relevant portions of traffic based on the granularity specified, such as PDU sessions or QoS flows. AMF 132 may relay the session establishment response back to RAN 120, including the finalized resource configurations. RAN 120 may then complete the setup of access network-specific resources.

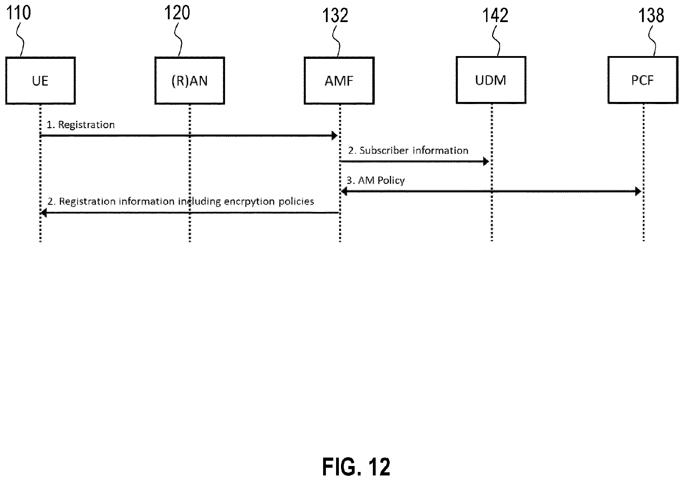

As shown in **Fig. 12****,** it is also proposed to have a SM-independent configuration method. An SM-independent configuration method is a way of setting or updating UP encryption policies outside the usual Session Management (SM) procedures (such as PDU session establishment). Instead of relying solely on SMF 136 during PDU session setup, SM-independent methods may involve providing encryption instructions during the UE's registration or re-registration, applying static or policy-based rules unrelated to specific sessions, or using other signaling paths. In other words, the configuration of which flows or PDU sessions must be encrypted does not hinge on the SM process, allowing the network and UE 110 to manage and enforce encryption policies without waiting for or modifying the SM signaling that ordinarily establishes a PDU session. In such a way, it may be possible to statically configure UE 110 to apply specific encryption to specific traffic.

This may be considered as part of the registration procedure. During initial or subsequent registration, the network may retrieve subscriber-related information from the UDM 142 or retrieve policy-related information from the PCF 138. These sources can include details such as whether UE 110 or an associated application desires encryption, or whether an operator policy mandates specific security requirements for certain types of traffic. This information may then be conveyed to UE 110 via NAS signaling during the registration procedure, allowing UE 110 to know, in advance, which traffic flows need encryption, even before any particular PDU session is set up.

When the operator or subscriber preferences change, or the network wants to enforce new encryption rules, further update mechanisms can be triggered. This may take the form of UE Configuration Update (UCU) or UE Parameter Update (UPU) messages, also over NAS signaling, to instruct UE 110 to adopt newly defined encryption policies. Because these updates do not depend on a concurrent SM procedure, they can be sent at any time and apply to future traffic or even existing connections as required.

In deciding which UP traffic should be encrypted under these SM-independent rules, the operator or policy engine can consider parameters such as the DNN (Data Network Name), which in 4G systems is analogous to the Access Point Name (APN). By assigning specific encryption settings based on the target data network, the network can tailor security for different traffic contexts. Similarly, IP filters can be used to identify flows by their destination IP, thereby selectively encrypting only those flows that need extra protection. In networks that rely on slicing, attributes like the S-NSSAI (Single-Network Slice Selection Assistance Information) or NSSAI can be leveraged to specify that certain slices have stricter security requirements, letting other slices handle traffic in a default or unencrypted mode. All of these approaches are driven by policy rather than the session management logic, giving the network and UE a flexible, out-of-band mechanism to enact or revise encryption rules independently of the usual PDU session establishment flow.

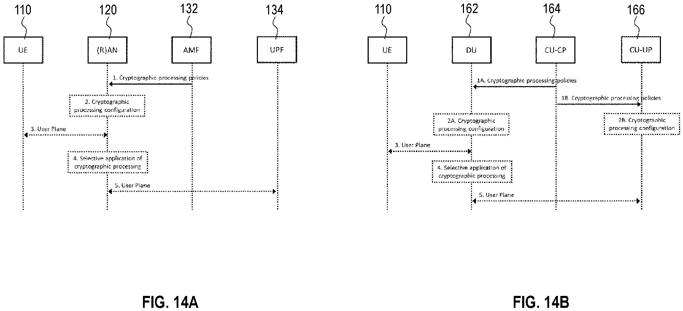

Fig. 14 shows a message sequence chart involving UE 110, (R)AN 120, AMF 132, UDM 142, and PCF 138. Fig. 14 depicts how, during the registration procedure, the network can request and obtain subscriber or policy data from the UDM 142 and PCF 138, then return the resulting encryption policy decisions back through the AMF 132 and R(AN) 120 to the UE 110.

When the UE 110 begins its registration procedure with the network, it sends a registration request that travels through R(AN) 120 to AMF 132. AMF 132, upon receiving the request, may consult UDM 142 to retrieve the subscriber information associated with UE 110, and may also forward relevant details to PCF 138 to determine any operator- or subscription-based policy rules. These rules can include which UP traffic must be encrypted, which algorithms to apply, or whether UE 110 is permitted to encrypt certain flows at all. Once UDM 142 and PCF 138 have returned the needed data, AMF 132 may consolidate the resulting policy-"registration information including encryption policies"-and send it back to UE 110. As a result, UE 100 may learn how to handle user plane traffic outside of normal Session Management (SM) procedures, for example by selectively encrypting only traffic destined for specific data networks or applying extra security based on slice parameters. This SM-independent approach allows the network to configure or update encryption requirements during registration or re-registration, ensuring that the UE can apply these policies immediately, without waiting for subsequent PDU session establishment signaling.

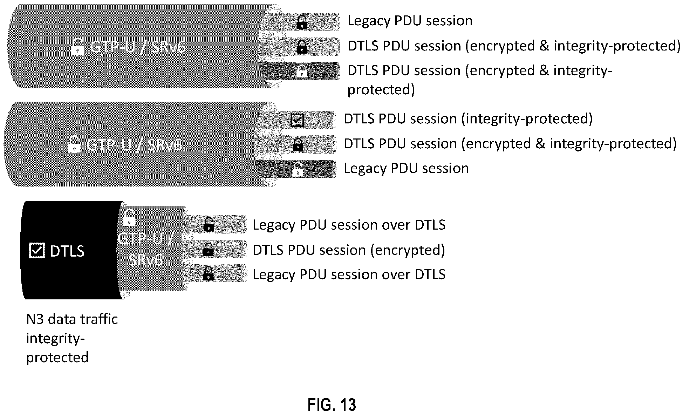

The upper portion of **Fig. 13** shows a single PDU session within an N3 tunnel being protected by DTLS. Even though the underlying transport might already be GTP-U or SRv6, DTLS may be layered specifically on top of one PDU session so that both confidentiality (encryption) and integrity (ensuring the data is unchanged) are preserved for that session alone. The rest of the traffic on the same N3 tunnel may remain unaffected, thereby limiting the cryptographic overhead to the single session that requires it.

The middle portion of Fig. 13 illustrates how different PDU sessions in the same UP tunnel can each receive a distinct level of security. Some sessions may have only integrity protection, meaning they are checked for changes but not encrypted, while other sessions may be fully encrypted, and still others might rely on no additional cryptographic protection at all. This may allow the operator or application to choose an appropriate level of security session by session, depending on factors such as application requirements or subscription policies.

The lower portion of Fig. 13 depicts a layered approach where integrity protection is applied across the entire UP interface, such as the full N3 link, while selective encryption is enabled for specific PDU sessions that need stronger confidentiality. In other words, all traffic benefits from at least integrity checks, but sessions that warrant extra privacy are individually encrypted on top of that integrity layer. This design may balance performance (since not all traffic must be encrypted) and security (since critical sessions can still be fully protected). By combining these approaches, the network can dynamically tailor cryptographic processing to each session's needs without compromising overall performance or security goals.

**Fig. 14A** illustrates a message sequence chart involving UE 110, (R)AN 120, AMF 132, and UPF 134. Five steps are shown, labeled from top to bottom. Step 1 is labeled "Cryptographic processing policies" and travels from the AMF 132 to the (R)AN 120, Step 2 is "Cryptographic processing configuration" at the (R)AN 120, Step 3 is "User Plane" action between the UE 110 and the (R)AN 120, Step 4 is "Selective application of cryptographic processing" at the (R)AN 120, and Step 5 is another "User Plane" action between RAN 120 and the UPF 134.

In Step 1, AMF 134 may provide cryptographic processing policies to (R)AN 120. These policies may originate from core-network policy functions or operator configurations and specify how (R)AN 120 should treat different user plane flows. Once received by the (R)AN, step 2 captures the internal action of configuring cryptographic parameters and rules based on the newly obtained policies. This can involve applying filters for QoS indicators such as 5QI, DSCP, ToS, or slice identifiers like S-NSSAI, as well as referencing SM-independent rules. After these policies are set, in Step 3, UE 110 may begin sending UP data, which the (R)AN forwards. Step 4 shows the (R)AN selectively applying the cryptographic settings specified in Step 2, encrypting or providing integrity protection to particular flows while leaving others unencrypted. Finally, in step 5, the user plane data proceeds toward UPF 134, subject to the selective cryptographic processing rules configured in the preceding steps. By using NG-AP procedures such as DOWNLINK RAN CONFIGURATION TRANSFER or AMF CONFIGURATION UPDATE, AMF 132 can direct (R)AN 120 to adopt different cryptographic schemes, ensuring flexible, policy-driven encryption for various user plane flows between (R)AN 120 and the core network.

**Fig. 14B** shows a message sequence chart between different entities in a disaggregated radio access network: UE 110, DU 162, CU-CP 164, and CU-UP 166. In a disaggregated (often O-RAN-based) radio access network architecture, the DU (Distributed Unit) 162 may handle lower-layer radio processing such as scheduling and some radio resource management close to antennas, while the CU (Central Unit) may handle higher-layer RAN functions. The CU itself is further split into two components: the CU-CP (Central Unit-Control Plane) 164, responsible for control-plane tasks and signaling, and the CU-UP (Central Unit-User Plane) 166, responsible for user-plane data processing and forwarding. This functional split may distribute processing more efficiently, allowing operators to place certain RAN components closer to the edge while consolidating others in a central location.

Steps labeled 1A and 1B indicate the provision of "cryptographic processing policies" from the CU-CP 164 to the DU 162 and to the CU-UP 166, respectively. Steps labeled 2A and 2B refer to "cryptographic processing configuration," indicating that the DU 162 and CU-UP 166 may configure themselves or their subordinate functions based on the received policies. Steps 3, 4, and 5 depict user plane traffic or actions taken upon it, such as "selective application of cryptographic processing".

In Fig. 14B, CU-CP 164 may acquire or generate cryptographic policies, possibly from the core network or through an internal policy engine, and distribute them to both DU 162 and the CU-UP 166 as shown in steps 1A and 1B. Each recipient may then perform its own configuration updates, as indicated in steps 2A and 2B, to ensure that the instructions are translated into actual cryptographic procedures, such as encryption or integrity protection settings. Once these policies are in place, the UP traffic may begin to flow in step 3 from UE 110 through DU 162 toward CU-UP 166. During step 4, DU 162 or CU-UP 166 may selectively apply the configured cryptographic measures to relevant parts of the traffic, for instance by encrypting only specific flows or by adding integrity checks. Finally, in step 5, the UP continues its path, having been treated according to the configured policies. This arrangement may allow a disaggregated RAN, such as in an O-RAN deployment, to protect UP traffic on the F1 interface or internally between DU and CU components, ensuring that different flows can each have tailored security settings.

When two or more UPFs are connected in a 5G network, their communication traverses the N9 interface. By applying the same cryptographic techniques used for intra-RAN components, operators can selectively encrypt or add integrity protection to specific traffic flows that pass between UPFs where needed, such as when they traverse datacenter boundaries. This capability may be useful when certain types of data require an enhanced level of security, while other data streams can remain unencrypted or rely on lighter security measures, allowing the network to optimize resources and maintain flexibility in routing.

The mechanism to control and steer these cryptographic decisions over the N9 interface may be managed through the N4 interface, which is the control channel between SMF 136 and UPFs 134. Through N4 signaling, SMF 136 may inform each UPF 134 about which traffic flows or PDU sessions should be encrypted, which cryptographic keys or algorithms to use, and whether only integrity protection is needed. Because SMF 136 has a comprehensive view of subscriber profiles and policies (often receiving such information from a PCF 138 or UDM), it can instruct any UPF 134 in the chain to apply the appropriate level of protection. Thus, the same selective encryption framework employed in RAN 120 can also ensure that inter-UPF traffic meets the correct security requirements without forcing all traffic over the N9 interface to bear the overhead of full encryption.

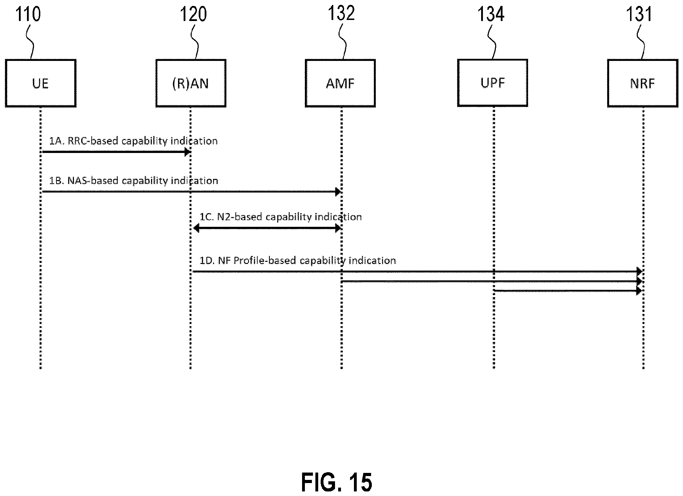

**Fig. 15** shows a message sequence chart depicting UE 110, (R)AN 120, AMF 132, UPF 134, and NRF 131. Several labeled messages are exchanged between these entities, illustrating different paths for exchanging cryptographic capability information. The first message, labeled "1A. RRC-based capability indication," travels from UE 110 toward (R)AN 120, representing an RRC signaling path. The second message, labeled "1B. NAS-based capability indication," travels from UE 110 directly to AMF 132, reflecting a NAS signaling exchange (such as during registration). A third message, labeled "1C. N2-based capability indication," appears between (R)AN 120 and the AMF 132, highlighting how RAN 120 can declare its capabilities toward the core network using an N2 interface procedure (e.g., NG-AP association). Finally, a set of messages labeled "1D. NF Profile-based capability indication" connect the AMF and UPF axes with the NRF axis, indicating that the network functions can register or retrieve cryptographic processing capabilities from the NRF 131 using NF profiles.

Each labeled message represents a different mechanism by which network entities may declare or discover cryptographic capabilities relevant to UP encryption or integrity protection. In "1A. RRC-based capability indication," the UE 110 may inform (R)AN 120 about its supported encryption algorithms and key handling methods through RRC messages. Complementarily, and not shown in Fig. 15, the (R)AN 120 may inform UE 110 about its supported encryption algorithms and key handling methods through RRC messages. In "1B. NAS-based capability indication," UE 110 may include similar capability details when communicating with AMF 132 during NAS procedures, such as during initial registration or tracking area updates. Complementarily, and not shown in Fig. 15, AMF 132 may inform UE 110 about its supported encryption algorithms and key handling methods through RRC messages. Complementarily, and not shown in Fig. 15, UE 110 may include similar capability details when communicating with SMF 136 during NAS procedures, such as PDU session establishment or modification. Complementarily, and not shown in Fig. 15, SMF 136 may inform UE 110 about its supported encryption algorithms and key handling methods through NAS messages In "1C. N2-based capability indication," (R)AN 120 may send its capability data to AMF 132 using higher-level signaling on the N2 interface, letting AMF 132 know which cryptographic modes RAN 120 can support. Finally, "1D. NF Profile-based capability indication" signifies how AMF 132, UPF 134, or other network functions can store or query cryptographic capabilities from NRF 131 by reading or updating NF profiles. This final step allows the broader network ecosystem to discover and coordinate encryption methods, ensuring consistent policy enforcement and backward compatibility across a variety of devices and deployment

According to Fig. 15, various network elements are configured to provide and/or receive capability indication information to and/or from other network elements, wherein the capability indication information specifies supported cryptographic processing capabilities (for UP traffic) of the apparatus or the other network elements.

The described apparatus 600 and method 00 for selectively applying cryptographic processing may be implemented in various network elements, including the RAN and the CN. For example, a gNB or other RAN node can integrate the apparatus 600 to handle local encryption decisions, while a UPF 134 or SMF 136 in the CN can implement the same functionality to manage and apply cryptographic policies at the core. Other functions, such as the PCF 136, can also embody the described approach by generating and distributing policy rules, and even disaggregated RAN components like a DU 162 or CU-UP 166 can deploy the method to enforce encryption at interfaces such as F1-U or Xn. In some cases, the implementation may be split across multiple entities, with each applying the relevant portion of cryptographic policies.

A general idea behind the present disclosure is to enable dynamic, granular control over how user plane traffic is protected, using a combination of encryption and integrity protection. This may involve receiving cryptographic policy information from various sources-such as subscription databases or policy control functions-and determining on a per-interface, per-session, or even per-QoS-flow basis whether to apply security measures. By allowing different traffic flows to receive distinct cryptographic treatments according to trust level, slice configuration, or operator policy, the network can optimize both performance and security. The proposed solution also contemplates SM-independent approaches, meaning that these encryption policies can be established outside the standard session management procedures, for instance during device registration or via NAS updates, ensuring flexible configuration that adapts readily to changing requirements.

The various described embodiments cover numerous scenarios where encryption is integrated or layered at different points in the protocol stack. They show how to assign cryptographic parameters at the RAN-core boundary (such as N3, N9, F1-U, or Xn-U), how to selectively protect individual QoS flows within a single session, and how multiple security layers can coexist or nest without causing unnecessary overhead. Certain embodiments also allow end-to-end encryption from the UE 110 to the CN 130, bypassing decryption at the gNB 122. Others detail how to update cryptographic policies dynamically, incorporate network slice parameters for fine-grained security handling, or rely on DTLS for flexible encryption within the user plane. All of these embodiments reflect a common goal of tailoring cryptographic protection to actual needs and policies, ensuring efficient resource use and robust data security.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (600) for selectively applying cryptographic processing to user plane, UP, traffic in a telecommunication network, the apparatus comprising:
processing circuitry (610) configured to
receive cryptographic policy information indicative of cryptographic policies for at least one portion of UP traffic;
determine, based on the cryptographic policy information, whether to apply cryptographic processing to the at least one portion of the UP traffic, wherein the cryptographic processing comprises at least one of encryption or integrity protection; and
selectively apply the cryptographic processing to the portion of the UP traffic at a granularity of at least one of an interface, a tunnel, a protocol data unit, PDU, session, or a quality-of-service, QoS, flow.

2. The apparatus (600) of claim 1, wherein the processing circuitry (610) is configured to receive the cryptographic policy information from and/or via at least one network function, management system, or subscription database, wherein the network function is, in particular, selected from a group comprising a Session Management Function, SMF, or a Policy Control Function, PCF, and wherein the subscription database is selected from a Unified Data Management, UDM, entity or a User Data Repository, UDR.

3. The apparatus (600) of claim 1 or 2, wherein the processing circuitry (610) is configured to selectively apply the cryptographic processing on one or more of
an N3 interface between a gNodeB, gNB, and a User Plane Function, UPF,
an N9 interface between UPFs,
an F1-U interface within disaggregated radio access network, RAN, components, or
an Xn-U interface between gNBs.

4. The apparatus (600) of any one of the previous claims, wherein the processing circuitry (610) is configured to
receive subscription data retrieved from a Unified Data Management, UDM, entity or a User Data Repository, UDR, the subscription data comprising cryptographic policies or encryption requirements associated with a user equipment, UE.

5. The apparatus (600) of any one of the previous claims, wherein the cryptographic policy information specifies parameters associated with cryptographic processing, network elements, session characteristics, or traffic management.

6. The apparatus (600) of claim 5, wherein the parameters associated with cryptographic processing include at least one of
the type of processing, including integrity protection or encryption, algorithms, or
settings, including IPsec, (m)TLS, DTLS, key lengths, or key derivation methods; wherein parameters associated with network elements include at least one of
endpoint-related information, including user identifiers or identifiers associated to user identifiers,
IP or MAC addresses, or
identifiers for network components, including gNB or UPF IP addresses,
wherein parameters associated with session characteristics include at least one of PDU session identifiers, PDU session types, application identifiers, or associated data network names, DNN; and
wherein parameters associated with traffic management include at least one of slice identifiers, QoS-related information, traffic classification markers, or filtering parameters.

7. The apparatus (600) of any one of the previous claims, wherein the processing circuitry (610) is configured to associate an encryption level or encryption requirement with a QoS flow within a PDU session, wherein distinct QoS flows use distinct cryptographic parameters or protocols.

8. The apparatus (600) of any one of the previous claims, wherein the processing circuitry (610) is configured to perform the cryptographic processing using a protocol selected from a group of IPsec, (m)TLS, and DTLS.

9. The apparatus of claim 8, wherein the cryptographic processing is implemented by encrypting user-plane data within the N3 interface, especially GTP-U payloads, using at least one of DTLS or (m)TLS, without encapsulating user plane packets in an IPsec tunnel.

10. The apparatus (600) of any one of the previous claims, wherein the cryptographic processing further includes repeated and/or nested multiple layers of cryptographic processing, especially dynamically applied, wherein the processing circuitry is configured to
detect when a user-plane protocol stack comprises multiple security layers.

11. The apparatus (600) of any one of the previous claims, wherein the processing circuitry (610) is further configured to
provide capability indication information to at least one other network element, the capability indication information specifying supported cryptographic processing capabilities, especially to
transmit or store the capability indication information directly or indirectly via a Network Repository Function, NRF, or via a network function (NF) profile.

12. The apparatus (600) of claim 11, wherein the capability indication information is provided via at least one of
a Radio Resource Control, RRC procedure between a user equipment, UE, and a radio access network, RAN, node;
a non-access stratum, NAS procedure between the UE and a core network, CN, node;
an N2 procedure, including an NG-AP association establishment between the RAN and the CN;
an F1 procedure, including an F1-AP association establishment between a CU or CU-CP and a DU;
an Xn procedure, including an Xn-AP association establishment between two gNBs, in particular between a CU-CP and another CU-CU or between a CU-CP and a gNB;
the NRF providing NF profile data, especially upon a request by a network function, for network function discovery and selection,
wherein each network element is informed of supported cryptographic processing methods and encryption parameters.

13. The apparatus (600) of any one of the previous claims, wherein the processing circuitry (610) is further configured to
provide cryptographic policy updates via non-access stratum, NAS, signaling, including at least one of UE Configuration Update, UCU, or UE Parameter Update, UPU.

14. The apparatus (600) of any one of the previous claims, wherein the UP-cryptographic-processing-related information is provided based on a policy-based decision triggered by any of
a request from the UE,
a request from a gNB,
an instruction from a Session Management Function, SMF, or
an instruction from a Policy Control Function, PCF, and
wherein the processing circuitry is configured to selectively apply cryptographic processing responsive to the trigger source.

15. A method of steering selective cryptographic processing policies in a mobile communications network, the method comprising
generating, at a policy control function, PCF, or session management function, SMF, cryptographic processing rules that specify how UP traffic is to be selectively encrypted or integrity-protected;
providing, by the PCF or SMF, the cryptographic processing rules to at least one network entity that handles UP traffic, wherein the cryptographic processing rules specify a cryptographic processing parameter selected from a group of
an encryption protocol identifier,
a QoS flow identifier,
a slice identifier,
a DNN/APN-based filter, and
a DSCP or ToS parameter; and
triggering, based on the cryptographic processing rules, selective cryptographic processing of the UP traffic at the at least one network entity, wherein the selective cryptographic processing is performed at a granularity of at least one of a PDU session or a QoS flow.

## Amended claims

### Amended claims in accordance with Rule 137(2) EPC.

1. An apparatus (600) for selectively applying cryptographic processing to user plane, UP, traffic in a telecommunication network, the apparatus comprising:
processing circuitry (610) configured to
receive cryptographic policy information indicative of cryptographic policies for at least one portion of UP traffic;
determine, based on the cryptographic policy information, whether to apply cryptographic processing to the at least one portion of the UP traffic, wherein the cryptographic processing comprises at least one of encryption or integrity protection; and
selectively apply the cryptographic processing to the portion of the UP traffic at a granularity of at least one of an interface, a tunnel, a protocol data unit, PDU, session, or a quality-of-service, QoS, flow,
wherein the processing circuitry (610) is configured to perform the cryptographic processing using a protocol selected from a group of IPsec, (m)TLS, and DTLS,
wherein the cryptographic processing is implemented by encrypting user-plane data within the N3 interface, especially GTP-U payloads, using at least one of DTLS or (m)TLS, without encapsulating user plane packets in an IPsec tunnel.

2. The apparatus (600) of claim 1, wherein the processing circuitry (610) is configured to receive the cryptographic policy information from and/or via at least one network function, management system, or subscription database, wherein the network function is, in particular, selected from a group comprising a Session Management Function, SMF, or a Policy Control Function, PCF, and wherein the subscription database is selected from a Unified Data Management, UDM, entity or a User Data Repository, UDR.

3. The apparatus (600) of claim 1 or 2, wherein the processing circuitry (610) is configured to selectively apply the cryptographic processing on one or more of
an N3 interface between a gNodeB, gNB, and a User Plane Function, UPF,
an N9 interface between UPFs,
an F1-U interface within disaggregated radio access network, RAN, components, or
an Xn-U interface between gNBs.

4. The apparatus (600) of any one of the previous claims, wherein the processing circuitry (610) is configured to
receive subscription data retrieved from a Unified Data Management, UDM, entity or a User Data Repository, UDR, the subscription data comprising cryptographic policies or encryption requirements associated with a user equipment, UE.

5. The apparatus (600) of any one of the previous claims, wherein the cryptographic policy information specifies parameters associated with cryptographic processing, network elements, session characteristics, or traffic management.

6. The apparatus (600) of claim 5, wherein the parameters associated with cryptographic processing include at least one of
the type of processing, including integrity protection or encryption, algorithms, or
settings, including IPsec, (m)TLS, DTLS, key lengths, or key derivation methods;
wherein parameters associated with network elements include at least one of
endpoint-related information, including user identifiers or identifiers associated to user identifiers,
IP or MAC addresses, or
identifiers for network components, including gNB or UPF IP addresses,
wherein parameters associated with session characteristics include at least one of PDU session identifiers, PDU session types, application identifiers, or associated data network names, DNN; and
wherein parameters associated with traffic management include at least one of slice identifiers, QoS-related information, traffic classification markers, or filtering parameters.

7. The apparatus (600) of any one of the previous claims, wherein the processing circuitry (610) is configured to associate an encryption level or encryption requirement with a QoS flow within a PDU session, wherein distinct QoS flows use distinct cryptographic parameters or protocols.

8. The apparatus (600) of any one of the previous claims, wherein the cryptographic processing further includes repeated and/or nested multiple layers of cryptographic processing, especially dynamically applied, wherein the processing circuitry is configured to
detect when a user-plane protocol stack comprises multiple security layers.

9. The apparatus (600) of any one of the previous claims, wherein the processing circuitry (610) is further configured to
provide capability indication information to at least one other network element, the capability indication information specifying supported cryptographic processing capabilities, especially to
transmit or store the capability indication information directly or indirectly via a Network Repository Function, NRF, or via a network function (NF) profile.

10. The apparatus (600) of claim 9, wherein the capability indication information is provided via at least one of
a Radio Resource Control, RRC procedure between a user equipment, UE, and a radio access network, RAN, node;
a non-access stratum, NAS procedure between the UE and a core network, CN, node; an N2 procedure, including an NG-AP association establishment between the RAN and the CN;
an F1 procedure, including an F1-AP association establishment between a CU or CU-CP and a DU;
an Xn procedure, including an Xn-AP association establishment between two gNBs, in particular between a CU-CP and another CU-CU or between a CU-CP and a gNB;
the NRF providing NF profile data, especially upon a request by a network function, for network function discovery and selection,
wherein each network element is informed of supported cryptographic processing methods and encryption parameters.

11. The apparatus (600) of any one of the previous claims, wherein the processing circuitry (610) is further configured to
provide cryptographic policy updates via non-access stratum, NAS, signaling, including at least one of UE Configuration Update, UCU, or UE Parameter Update, UPU.

12. The apparatus (600) of any one of the previous claims, wherein the UP-cryptographic-processing-related information is provided based on a policy-based decision triggered by any of
a request from the UE,
a request from a gNB,
an instruction from a Session Management Function, SMF, or
an instruction from a Policy Control Function, PCF, and
wherein the processing circuitry is configured to selectively apply cryptographic processing responsive to the trigger source.

13. A method of steering selective cryptographic processing policies in a mobile communications network, the method comprising
generating, at a policy control function, PCF, or session management function, SMF, cryptographic processing rules that specify how UP traffic is to be selectively encrypted or integrity-protected;
providing, by the PCF or SMF, the cryptographic processing rules to at least one network entity that handles UP traffic, wherein the cryptographic processing rules specify a cryptographic processing parameter selected from a group of
an encryption protocol identifier,
a QoS flow identifier,
a slice identifier,
a DNN/APN-based filter, and
a DSCP or ToS parameter; and
triggering, based on the cryptographic processing rules, selective cryptographic processing of the UP traffic at the at least one network entity, wherein the selective cryptographic processing is performed at a granularity of at least one of a PDU session or a QoS flow,
wherein the cryptographic processing is performed using a protocol selected from a group of IPsec, (m)TLS, and DTLS,
wherein the cryptographic processing is implemented by encrypting user-plane data within the N3 interface, especially GTP-U payloads, using at least one of DTLS or (m)TLS, without encapsulating user plane packets in an IPsec tunnel.
